(19) **Europäisches Patentamt / European Patent Office / Office européen des brevets**

(11) **EP 4 703 978 A1**

(12) # EUROPEAN PATENT APPLICATION

(43) Date of publication:
04.03.2026 Bulletin 2026/10

(51) International Patent Classification (IPC):
*G06N 10/20* (2022.01)    *G06N 10/60* (2022.01)

(21) Application number: 24197732.1

(22) Date of filing: 30.08.2024

(52) Cooperative Patent Classification (CPC):
G06N 10/60; G06N 10/20

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Phasecraft Limited**
**London Greater London W1T 4PW (GB)**

(72) Inventors:
• **KLASSEN, Joel**
  **London, W1T 4PW (GB)**
• **DERBY, Charles**
  **London, W1T 4PW (GB)**

(74) Representative: **Mathys & Squire**
**The Shard**
**32 London Bridge Street**
**London SE1 9SG (GB)**

(54) **IMPROVED PHASE ESTIMATION IN QUANTUM COMPUTING**

(57)    Disclosed herein are methods and systems for improved phase estimation in quantum computing. For example, included herein are methods for determining phase information of a matrix representative of a quantum circuit. In such examples, the method comprises: receiving, a unitary matrix, $U_M$ representative of a quantum circuit, U which acts or a target set of qubits and identifying generalised Pauli operators, E and S associated with the unitary matrix, $U_M$, the matrices satisfying a first set of conditions: $ES = -SE$; $EU_M = U_M^{-1}E$; and $SU_M = U_M S$. The method further comprises defining an input state $|\psi\rangle$ to the quantum circuit, U represented by the unitary matrix $U_M$, wherein the input state $|\psi\rangle$ has support confined to the +1 or -1 eigenspace of S; obtaining phase information corresponding to the quantum circuit, U by: preparing a resource state $|\psi\rangle_r = |\psi\rangle + e^{ix} E |\psi\rangle$ and applying $U_M$ to the resource state a predetermined number of times to provide an output state encoding eigenvalues $e^{i\phi_i}$ of the quantum circuit U.

300

```
┌─────────────────────────────────────────────────────┐
│ receive a matrix representative of a quantum circuit, the │ ─ 310
│ matrix satisfying a first set of conditions          │
└─────────────────────────────────────────────────────┘
                          │
                          ▼
┌─────────────────────────────────────────────────────┐
│ define an input state to the quantum circuit         │ ─ 320
└─────────────────────────────────────────────────────┘
                          │
                          ▼
┌─────────────────────────────────────────────────────┐
│ prepare a resource state based on the input state    │ ─ 330
└─────────────────────────────────────────────────────┘
                          │
                          ▼
┌─────────────────────────────────────────────────────┐
│ apply the matrix to the resource state a predetermined │ ─ 340
│ number of times                                      │
└─────────────────────────────────────────────────────┘
```

FIG. 3

EP 4 703 978 A1

**Description**

<u>Technical Field</u>

The disclosure relates generally to a computer-implemented method and system for improving phase estimation in quantum computing. In particular to methods and systems for using improved phase kickback in phase estimation procedures.

<u>Background</u>

Quantum phase kickback is a core subroutine in many quantum algorithms. Traditional methods for implementing quantum phase kickback involve preparation of a control register in a |+⟩ state performing a controlled unitary operation on a target state a predetermined number of times.

In cases where the target state is an eigenstate of the unitary operation, this accumulates an associated phase in the control register, to which subsequent processing steps may be applied.

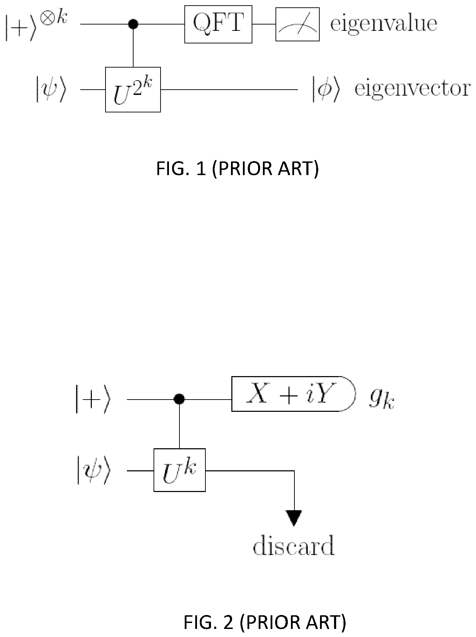

Phase kickback forms a core component of quantum phase estimation as it is a central subroutine in many quantum algorithms. Phases associated with the target unitary dynamics are accumulated a variable number of times in a larger register, and a Fourier transform is subsequently applied to the register. Traditionally the register is a quantum register and the quantum Fourier transform is performed coherently. This may be achieved even with a single control qubit by feed-forward measurement operations in a process called iterative phase estimation (IPE). Phases may also be read out of a single control register into a classical register on which a classical Fourier transform may be applied. This latter procedure has been called statistical phase estimation (SPE). Figures 1 and 2 show schematic diagrams of standard circuits for implementing IPE and SPE respectively. In Figure 1 a circuit 100 is shown in which the control register is prepared in a superposition of control values, and a controlled version of the target circuit is executed a repeated number of times (depending on the control value) on a set of data qubits and encoding eigenvalues of the target circuit into the control register via a phase kickback mechanism. A quantum Fourier transform protocol is either subsequently or simultaneously applied to the control register to extract information about the eigenvalues. This process of resolving eigenvalue information causes the corresponding eigenvector to be prepared on the data qubits.

Figure 2 shows a variant of this protocol called statistical phase estimation (SPE) which eschews the need for the quantum Fourier transform and instead uses a classical Fourier transform on phase information measured directly from the control register. The circuit 200 shown in this variant is less demanding on circuit resources but does not allow for the resolution of individual eigenvalue-eigenvector pairs and instead retrieves the spectral distribution of the circuit weighted by the support on the input state. In both IPE and SPE only a single control qubit is required to which phase kickback is applied. One of the challenges for executing phase kickback is the cost overhead of executing controlled unitary dynamics. This manifests not only in the increased gate cost of a controlled circuit, but also by the increased cost of having a common qubit on which many circuit elements need to act.

On hardware with limited connectivity this requires costly swap operations to bring distant data qubits adjacent to the control register. Furthermore, applying controlled operations from a common single-qubit control register can dramatically increase circuit depths due to the serial scheduling of circuit operations that might otherwise be executed in parallel.

There have been a number of strategies for avoiding these problems. For example, by using a multi-qubit control register, preparing a cat state on this register, and distributing the qubits of this register across the device, one may avoid the cost of bringing distant qubits adjacent to the control register, and also avoid the cost of parallelization. However this comes with the cost of preparing the cat state and introducing a number of qubits that scales with the number of gate operations in the target unitary. Furthermore, the cost of every gate operation in the circuit is increased due to its interaction with these addition ancillary qubits. Another approach is to apply control-free phase kickback (as *shown in* A. E. Russo, K. M. Rudinger, B. C. A. Morrison, and A. D. Baczewski. Evaluating energy differences on a quantum computer with robust phase estimation. Phys. Rev. Lett., 126:210501, May 2021) on a pure target state by identifying a reference state which is guaranteed to be an eigenstate of the unitary that is orthogonal to the target state, and preparing a superposition of the two, encoding the phase kickback in their relative phase.

An earlier proposal for control free phase estimation (see *again A. E. Russo, K. M. Rudinger, B. C. A. Morrison, and A. D. Baczewski)* is to identify a reference state $|\phi\rangle$ that is an eigenstate of U with a known eigenvalue $e^{i\phi}$ and has no overlap with the target input eigenstate $|\lambda\rangle$, so that one may prepare a cat state:

$$|cat\rangle \sim |\phi\rangle + |\lambda\rangle$$

A relative phase is then introduced under the action of U:

$$U|cat\rangle \sim |\phi\rangle + e^{i(\lambda-\phi)}|\lambda\rangle$$

The phase $\lambda$ can then be read out by subtracting the known reference phase $\phi$. This may be extended by linearity to an arbitrary input state $|\psi\rangle$ as long as it does not have support on the reference state. A downside of this method is that one must have prior knowledge of a reference state, and knowledge that the target input state has no support on this reference state.

There are two previous proposals for retrieving quantum phase information that leverage similar structure in the Hamiltonian to what we consider in this work. In Sirui Lu, Mari Carmen Bañuls, and J. Ignacio Cirac. Algorithms for quantum simulation at finite energies. PRX Quantum, 2:020321, May 2021, a Hamiltonian $H$ a unitary operator $R$ and a Hermitian operator $T$ such that $RHR^\dagger = -H + T$ is considered. Provided the input state $|\psi\rangle$ is an eigenstate of $R$, then there is a guarantee that $g(t) = \psi\, e^{iHt}\,\Psi$ is real, and thus can be extracted by sampling $|\psi\rangle$ at the end of the dynamics, and inferring the sign by using the analyticity of $g(t)$.

The requirement that the target state $|\psi\rangle$ be an eigenstate of an operator that anti-commutes with H is fairly restrictive. Furthermore $|\psi\rangle$ is required to be an efficiently preparable pure state in order to be able to sample $|\psi\rangle$ at the end of the dynamics.

Another proposal (Kh.P. Gnatenko, H.P. Laba, and V.M. Tkachuk. Energy levels estimation on a quantum computer by evolution of a physical quantity. Physics Letters A, 424:127843, 2022) concerns estimating spectral values of a Hamiltonian $H$ by measuring the expectation value of an operator A which anti-commutes with $H$ for a dynamically evolved starting state $|\psi\rangle = \sum_i c_i |\lambda_i\rangle\,\rangle$. In this case we have:

$$A(t) \quad := \langle\psi|e^{iHt}Ae^{-iHt}|\psi\rangle \quad (1)$$
$$= \sum_j g_j\, e^{-i2\lambda_j t}\quad (2)$$

where $g_j = \sum_i c_i^* A_{ij} c_j$ and $H|\lambda_j\rangle = \lambda_j|\lambda_j\rangle$.

We see that spectral information for an eigenvalue $\lambda_j$ can be extracted for those input states with the right support so that $g_j \neq 0$. However it is worth noting that for an input eigenstate $|\lambda_j\rangle$ $(\lambda_j \neq 0)$ we have:

$$g_j \quad = \langle\lambda_j|A|\lambda_j\rangle = \tfrac{1}{\lambda_j}\langle\lambda_j|\mathrm{H}A|\lambda_j\rangle = -\langle\lambda_j|A|\lambda_j\rangle = 0 \qquad (3)$$

this illustrates that this protocol makes fairly specific demands on the structure of the input state in order to resolve certain eigenvalues, and that it may be difficult to control this in order to extract information about the spectral values that are of interest.

There is a need for a method that requires no prior knowledge of any eigenstates or eigenvalues of the target unitary U and furthermore there is a need for methods that make no demands on the input state other than ensuring that the state obey a symmetry which is also a symmetry of the unitary, which is easy to ensure and highly commensurate with the aims of phase kickback.

<u>Summary</u>

The various methods and systems described below each allow phase information to be extracted from quantum circuits. It is often desirable to extract either individual eigenvalue and eigenvector pairs or a signal g(n) which encodes this information and can be extracted by classical signal processing. Phase information may be used as part of this process, so improved methods for identifying this phase information have a range of uses in this context.. As noted above, there is a demand for doing this in the absence of any knowledge about the specific form of the eigenvalues or eigenstates of a unitary matrix representing the circuit or the input provided to the circuit. This broadens the applicability of processes to a wider set of circuits. This in turn broadens the useful applications of a wide range of real world quantum circuits, since phase estimation can be performed on them.

The disclosure introduces a novel version of phase kickback, a key component of the widely used phase-estimation subroutine, referred to herein as Algebraic Phase Kickback (APK), which can be applied to a subset of target unitaries which manifest certain symmetries. This procedure exploits the algebraic relationships between a unitary and specific operators which define these symmetries to extract phase information without requiring extra qubits or controlled implementation of the unitary and instead requiring only an overhead in state preparation. This removes the need for non-local control lines to an ancilla and importantly, decouples the increase in control complexity from the depth of the unitary. Technical benefits of APK are most prevalent for near-term (Noisy, Intermediate-Scale Quantum - NISQ) devices where qubits are few, device connectivity is limited, and even a marginal decrease in gate count can have a significant impact on signal. In the case of time dynamics simulation provided herein are easy to check conditions for when TDS of a target Hamiltonian is compatible with APK. Furthermore, methods of altering Hamiltonians to be suitable for the protocol with often only a marginal increase in cost compared to standard phase kickback are suggested.

As illustrated later in this document, APK is tested by performing statistical phase estimation on the Trotter simulated evolution of the transverse-field Ising model on a mixed state in a symmetry sector of the system, comparing with standard single-ancilla phase kickback. The outcome was favourable to APK with methods reproducing the spectrum of the model more accurately for all Trotter depths tested. As well as this, when comparing circuits with similar 2-qubit gate count, the APK based method was closer to the ideal trotter circuit, indicating that it is less susceptible to device noise.

In summary, the presently disclosed techniques provide a technical advantage in that for any quantum unitary circuit, specific readout of information allows for the extraction of phase information. In particular, the approach taken is specifically adapted to current Noisy, Intermediate-Scale Quantum (NISQ) architectures, in which reduction of qubits needed and gate number and/or depth is crucial to extracting accurate and reliable information from quantum calculations performed on a quantum computer.

Aspects and embodiments of the invention are set out below and in the appended claims and aim to address at least some of the above-described problems, and related problems.

Disclosed herein is a computer-implemented method for determining phase information of a matrix representative of a quantum circuit, the method comprises: receiving, a unitary matrix, $U_M$ representative of a quantum circuit, U which acts on a target set of qubits and identifying generalised Pauli operators, E and S associated with the unitary matrix, $U_M$, the matrices satisfying a first set of conditions: $ES = -SE; EU_M = U_M^{-1}E;$ and $SU_M = U_MS$; defining an input state $|\psi\rangle$ to the quantum circuit, U represented by the unitary matrix $U_M$, wherein the input state $|\psi\rangle$ has support confined to the +1 or -1 eigenspace of S; obtaining phase information corresponding to the quantum circuit, U by: preparing a resource state $|\psi\rangle_r = |\psi\rangle + e^{ix} E |\psi\rangle$. For example, a resource state may be produced with the form $|\psi\rangle_r = e^{i\pi/4E}|\psi\rangle$, of course, the phase of the resource state is dependent on the operation performed to obtain the resource state and a resource state with a different phase x, other than the one produced by applying $e^{i\pi/4E}$ could equally be obtained. $U_M$ is applied to the resource state a predetermined number of times to provide an output state encoding eigenvalues $e^{i\phi_i}$ of the quantum circuit U. Of course, it is understood that applying $U_M$ to the resource state a predetermined number of times can be thought of as repeatedly applying $U_M$ to the resource state m times, or equivalently, applying $(U_M)^m$ to the resource state. Mathematically, this can just be performed by calculating $(U_M)^m$ and applying that operator to the resource state. In physical hardware, while it may be possible to construct a circuit representing the operation $(U_M)^m$, this is equivalent to alternatively setting up a circuit to implement $U_M$, and feeding in the resource state, looping the output of the $U_M$ circuit back into the input and repeating this until the circuity has been executed m times in total. Note that in this latter example, each time the circuit is executed, the input state has in general changed from the input used on the previous iteration. Nevertheless this is equivalent to the $(U_M)^m$ options discussed above.

This operates by taking a circuit representative of a quantum circuit and applying it to a resource state to obtain phase information of the quantum circuit . The intuition here is that provided S and E exists for the matrix representative of the quantum circuit, the circuit has a symmetry S which cuts the Hilbert space in half so that the circuit U acts like a matrix $U_M$ in the +1 eigenspace of S and $U_M^{-1}$ in the -1 eigenspace of S. Therefore, this binary degree of freedom can be used as an effective control qubit embedded in our Hilbert space in which to perform phase kickback.

This solves the problem of how to determine phase information of a matrix representative of a quantum circuit without the use of control qubits. This is advantageous because it vastly reduces the circuit cost (measured in gate count and/or depth and/or gate complexity) by a multiplicative factor in the original cost of U. Similarly, certain ways of constructing a circuit may lead to a deeper arrangement of gates (deeper meaning that there are a greater number of consecutive operations required), which can increase noise due to decoherence of quantum states with time. These factors in general will be considered in deciding the specific form of a quantum circuit to implement a given quantum calculation. The present invention allows for phase estimation to be implemented in a simpler format and thereby provides an advantage to the skilled person in that the simpler circuits required for phase estimation in the current disclosure are inherently better suited to the current (NISQ) state of quantum computing hardware.

Furthermore, the methods disclosed herein reduce the number of qubits on which the target circuit must act, this qubit number making phase estimation particularly challenging for quantum computing hardware with limited qubit connectivity (or limited total number of qubits), requiring significant gate overhead to facilitate the interaction between the control register and the data qubits. Further still, this method removes the requirement for prior knowledge of any of the eigenstates or eigenvalues of the matrix, broadening the application of phase estimation methods relative to the limitations of known systems, discussed above.

The confinement of the input state to either the +1 or -1 eigenspace of S cuts the Hilbert space in half providing a technical effect of removing the need for the control qubits. In examples where the input state is in the +1 eigenspace of S, a subspace is defined left invariant by the evolution. Similarly, as is an input state in the -1 eigenspace of S. Importantly, provided a determination is made as to either the +1 or -1 eigenspace to be used, the Hilbert space is cut in half and the technical effect of reduced cost by eschewing the requirement for a control operation is achieved.

Optionally E and S are multi-qubit Pauli operators. Multi-qubit Pauli operator is a term known in the art, and used herein, to refer to operators that are the tensor product of a plurality of 2x2 Pauli operators. In most of the examples described herein, E and S are multi-qubit Pauli operators, which simply means that, advantageously, there is no limit to the size of $U_M$, provided it is consistent with the dimensions or multi-qubit Pauli operators E and S. In other words, the methods and systems described herein are not limited to $U_M$ that is 2x2 in dimension.

We can write $|\psi\rangle = \Sigma_i \alpha_i |\phi_i\rangle$, indicating the general case where $|\psi\rangle$ is a superposition of eigenvectors $|\phi_i\rangle$ of $U_M$ with eigenvalues $e^{i\phi_i}$. In this case, applying the target circuit to the resource state yields: $U_M|\psi\rangle_r = \Sigma_i \alpha_i(e^{i\phi_i}|\phi_i\rangle + e^{-i\phi_i}iE|\phi_i\rangle) = \Sigma_i e^{-i\phi_i}\alpha_i(e^{i2\phi_i}|\phi_i\rangle + iE|\phi_i\rangle)$. This has a similar structure to a traditional phase kickback circuit, except there is no ancillary qubit, and the phase is doubled. The skilled person will readily understand that the protocol trivially generalises to mixed states by the linearity of quantum circuits. As such while this document restricts discussion to pure states, the implicit assumption is that mixed states may also be used as input states.

As discussed above, the novel methods of algebraic phase kickback described herein are limited to a specific subclass of unitary matrices satisfying certain algebraic properties, namely those unitaries whose generating Hamiltonian satisfies an anti-symmetry $EH = -HE$, and a symmetry $SH = HS$ for some pair of operators $E$ and $S$ such that $SE = -ES$. However, also provided herein are methods according to which any Trotterized time dynamics circuit can be modified in order to be incorporated into this class. No matter the scale of the cost reduction, this modification opens up all quantum circuits to the application of the advantageous methods set out herein. In such examples, receiving unitary matrix $U_M$ includes: receiving a unitary matrix $V_M$ representative of a quantum circuit V, wherein $V_M$ does not satisfy the first set of conditions; and modifying $V_M$ to provide $U_M$ for which generalised Pauli operators, E and S do exist which satisfy the first set of conditions. In such examples, modifying $V_M$ includes: introducing one or more ancillary qubits; identifying unitary matrix $U_M$ acting jointly on the target and one or more ancillary qubits; identifying a target input state $|\psi'\rangle$ such that: $|\psi'\rangle = |\psi\rangle|a\rangle$ where $|a\rangle$ is a state encoded on the one or more ancillary qubits; $S|\psi'\rangle = |\psi'\rangle$; and $U|\psi'\rangle = V|\psi\rangle a\rangle$. This allows modifying of a circuit such that algebraic phase kickback can be applied and is advantageous because it increases the scope of application of the method with the associated advantages set out herein.

Optionally, provided the generator is known, the generator can be altered to build a different circuit. As such, modifying $V_M$ to provide $U_M$ may optionally further comprise: identifying a Hamiltonian, $H = \Sigma_j h_j$ by which $V_M$ is generatable such that $V = e^{\{iH\}} + \varepsilon$; and introducing ancillary qubits and identify a set of operators $P_j$ such that: each $P_j$ acts on the ancillary qubits; $P_j P_k = P_k P_j$ for all (j,k); and E and S satisfy the first set of conditions for H'; $H' = \sum_j h_j' = h_j \otimes P_j$ $U_M$ is equal to $e^{iH'} + \varepsilon'$; $|\psi'\rangle$ is equal to $|\psi\rangle \otimes |a\rangle$; and $|a\rangle$ is a common +1 eigenstate of all $P_j$ This extends the action of $h_j$ onto the ancillary qubits (each j where $P_j \neq 1$). There are a plurality of known protocols in the art to find $e^{\{iH\}}$ of the generator - any appropriate one of which can be followed and $\varepsilon$ is small enough that it does not need to be known but indicates that $e^{\{iH\}}$ can't be hit exactly. Therefore, given V and a generator the generator can always be written as an expansion of terms to approximate U arbitrarily closely (i.e. within e).

Optionally $P_j$ are chosen to minimize the cost of executing the circuit U. In particular, gate count and circuit depth are examples of costs to be minimised.

Optionally the number of indices j for which $P_j = 1$ is maximized. Beneficially, this minimises the number of terms in the Hamiltonian that need to be modified so that for those unmodified terms the cost of executing them does not need to be increased.

Optionally, modifying $V_M$ to provide $U_M$ may further comprise identifying a first subset, $h_m$ of $h_j$ for which there exists a Pauli operator F such that for each $h_m: h_m F = -F h_m$, and identifying a second nonempty subset $h_n$ of $h_j$, wherein $h_m$ and $h_n$ are compliment subsets; the method further comprising: introducing ancillary qubits and associating to each term $h_n$ in the second subset a corresponding Pauli operator $P_n$; and identifying Pauli operators Q and S such that: $P_n P_{n'} = P_{n'} P_n$ for all (n,n'); $QP_n = -P_n Q$ for all n; $Qhm = h_m Q$ for all $h_m$ in the first subset; $S Q = -Q S$; $h'_n = h_n \otimes P_n$; $E = F \otimes Q$; $|\psi'\rangle$ is equal to $|\psi\rangle \otimes |a\rangle$; and $|a\rangle$ is a common +1 eigenstate of all $P_n$. This is advantageous because given a non-compliant V a minimal modification of V can be identified so that it complies. This modification involves introducing ancillary qubits and modifying $h_j$ so that they act on these qubits so that the new unitary U generated by the modified $h_j$ has an E and S which comply with the framework set out above in which APK operates, and furthermore the ancillary qubits are set to start in a state so that U acts like V on the original target qubits. The important point is that the number of additional qubits that need to be added, and the number of $h_j$ that need to be modified is minimized by identifying the largest subset $h_j$ that do satisfy the requisite conditions, and then only needing to modify the remaining $h_j$ not in that subset.

Optionally, given a Hamiltonian, $H = \Sigma_j h_j$, where $h_j = a_j \sigma_j$ and $\sigma_j$ is a Pauli operator in the Hamiltonian a method fort finding a maximal subset of terms $h_m$ of $h_j$ (denotes as subset S) such that there exists an operator F such that for each $h_m$: $h_m F = -F h_m$ comprises:

(a) finding a minimal generating subset G of the Pauli operators $\sigma_j$ in the Hamiltonian, all Paulis $\sigma_j$ in the Hamiltonian

are a unique product of these generators, for example, such a minimal generating subset can be found using standard methods in group theory;

(b) for any element of this generating set $\sigma_j \in G$, let $Ne(\sigma_j)$ and $No(\sigma_j)$ be respectively the number of Paulis in the Hamiltonian which are even and odd products of generators, that include $\sigma_j$ including $\sigma_j$ itself as an odd product, further, from G choosing a $\sigma_j$ such that $Ne(\sigma_j)$-$No(\sigma_j)$ is maximised and greater than 0 and adding the corresponding $h_j$ to S wherein if this cannot be done, the method is terminated;

(c) choosing any Pauli $\sigma_k$ in the Hamiltonian which is not in G and which when expressed as a product of generators from G includes $\sigma_j$. Remove $\sigma_j$ from G and replace it with $\sigma_k$ wherein the number of terms which are even products of generators in G has been reduced by $Ne(\sigma_j)$-$No(\sigma_j)$ (a positive number); and

(d) repeating steps (b) and (c), terminating as in step (b) or after timeout returning S.

Optionally for each $h_n$ in the second subset, an ancillary qubit $q_n$ is introduced. In such cases, the method further comprises: setting $P_n = Z_{qn}$ on the qubit $q_n$; setting $S = Z_{qn}$ for a choice of $q_n$; and setting $Q = \otimes_{qn} X_{qn}$. This is advantageous because it allows retaining of the locality of terms in the Hamiltonian. The choice of $q_n$ referred to here is a free choice of whatever is most convenient for the user. The notation $\otimes_{qn}$ is of course, used as shorthand for $X_{q1} \otimes X_{q2} \otimes ... \otimes X_{qn}$ throughout the disclosure. Optionally, an explicit construction wherein an ancillary qubit $a$ is introduced and for each $h_n$, $P_n = Z_a$ on qubit a, setting $S = Z_a$ and $Q = X_a$ is provided.

As discussed above, circuit cost can be reduced by reducing gate count and/or depth and/or gate complexity. Therefore, the particular method of the methods described above by which the circuit may be adjusted to be compliant is likely to be hardware dependent as the cost benefits of reducing gate count vs circuit depth and/or gate complexity are specific to the hardware available.

As discussed above, phase kickback is a key protocol in phase estimation. The novel method of phase kickback described herein can be used in statistical phase estimation wherein obtaining phase information corresponding to the circuit U further comprises: measuring $(E - SE) = g_k$, wherein the predetermined number of times the circuit is applied is equal to a value k determined by a desired precision to which the phase information is to be extracted. This yields the standard signal '$g_k$' retrieved by typical statistical phase estimation methods but advantageously does not require the use of control qubits.

Optionally the value k corresponds to a time parameter, wherein each execution of the circuit corresponds to a small timestep delta and wherein executing the circuit k times, corresponds to evolving for time k * the small timestep. This evolves the circuit for time k*delta and provides a timeseries signal by iterating over a sequence of k values.

Optionally obtaining phase information corresponding to the circuit U further comprises performing a classical Fourier transform, a matrix pencil method and/or further post processing on the signal $g_k$. This allows retrieval of spectral information from the obtained time series. The number of k values, their maximum and their spacing may be adjusted based on the desired spectral information to be resolved (the desired resolution of spectral information one wishes to obtain). As such, algebraic statistical phase estimation allows retrieval of a spectral distribution of the circuit weighted by the support on the input state obtained using a classical Fourier transform (avoiding the need to use quantum Fourier transform as in iterative phase estimation) on $g_k$ measured from statistical phase estimation.

Statistical phase estimation does not allow for the resolution of individual eigenvalue eigenvector pairs and instead retrieves the spectral distribution of the circuit weighted by the support on the input state. If there is a requirement for individual eigenvalue and eigenvector pairs to be resolved, algebraic phase kickback can instead be applied to standard phase estimation (also referred to herein as iterative phase estimation - IPE). In such examples, an initial value of n represents a position of the least significant bit to be read out in the binary expansion of a phase to be read out and the predetermined number of times the circuit is applied to the resource state is equal to $2^{n-1}$. The method further comprises:

(a) reading out the nth bit by measuring E;
(b) reducing the value of n by 1;
(c) rotating into an intermediate resource state by applying a unitary correction dependent on the most recent result of measuring E;
(d) applying $U_M$ $2^{n-1}$ times to the resource state;
(e) applying a unitary to provide an appropriate rotation to undo the bits which have already been read out ; and
(f) reading out the nth bit by measuring E,

where steps (b) to (f) are repeated with a final iteration being when n is equal to a value of 2, meaning that after the $2^{nd}$ (n=2) bit has been read out, the method terminates.

This method allows for resolution of individual eigenvalue-eigenvector pairs when a quantum Fourier transform is used. Note that the method stops when n = 2 (e.g. between step (b) and step (c) there may be a check made to determine the value of n, and where n = 1, the method terminates, or if n=2 before step (b) executes, the method terminates, etc.). This can be thought of as follows:

The iterative phase estimation measures a phase angle represented as a binary string as $\theta = 0.\, b_1\, b_2\, b_3\, b_4 \ldots b_n \ldots$ where $b_i$ represent binary digits in the phase. If an eigenstate of the unitary is input into the protocol, the eigenvalue of this state is $e^{i2\pi\theta}$. If the unitary is applied k times in standard iterative phase estimation, the effect is to kick back a phase multiplied by k, so the output is a phase $e^{i2\pi k\theta}$. Therefore, to get the nth bit, we need to multiply the phase by $2^n$ ($\theta \cdot 2^n = 0.b_n \ldots$ since any binary numbers above the decimal have no effect on the phase $e^{i2\pi\theta}$ due to the modulo effect of the complex exponential and the factor of $2\pi$ in the exponent), so we apply the unitary $2^n$ times and check if the phase is (-1) or (+1) by measuring E to read out a bit. The (n-1)th bit, $b_{n-1}$, can then be read by applying the unitary $2^{n-1}$ times, which gives the us $\theta \cdot 2^{n-1} = 0.\, b_{n-1}\, b_n \ldots$ At this stage, to extract $b_{n-1}$ we just need to remove the $b_n$ portion, so we rotate the kickback register to introduce a phase $e^{i2\pi\theta}$ for $\theta = 0.0b_n$ to subtract away the $0.0b_n$ so all we have left is the desired $0.b_{n-1}$. This part underpins the concepts of step (e), in which previously read out bits are accounted for. This process can be repeated for each digit to get each bit in the binary expression of $\theta$, accounting for every bit read out up to that point as the method iterates.

However in the protocol above, the unitary kicks back twice the phase: $(2 \cdot \theta)$, so we need to account for this. If we want the nth bit we only need to apply the unitary $2^{n-1}$ times, since we already have a factor of 2. Otherwise the above discussion applies here too. We also can't access the leading bit $b_1$ using this method, because it's always going to be on the other side of the decimal for any number of applications of U.

It will be apparent that, having selected an initial value of n, we therefore extract the nth position in the binary expression of the fractional part of $\theta$ as the least significant bit extracted, and then move through progressively more significant bits until we reach the second bit. The fact that n changes as the method executes multiple times is not an issue, since this simply refers to the position of the bit presently being read out.

In step (c) if we don't actively correct but instead passively enter a different Pauli frame then this corresponds to redefining E to be -E in the protocol (and vice-versa). Because E plays no role in the unitary dynamics, and because it does not play a role in the rotation by S, the only place where it changes anything is when we read out the bit, which is done by measuring E. In this case the meaning of the next bit will have changed, that is to say, if normally we take 1 to correspond to E=+1 and 0 to correspond to E=-1, then now we should reverse that convention because of the sign change of E. In this case, an alternative correction would be to conditionally flip the bits depending on the history of measurements of E.

Another way of thinking about it is that the measurement of the bit is a measurement of whether you flip from your starting state. So if you started in the +1 eigenstate of E, and you end in the -1 eigenstate of E, then the bit is 1. Similarly, if you had started in the -1 state and ended in the +1 state, then the bit is also 1.

Optionally step (c) comprises: identifying the most recent measurement is E = +1 and applying no rotation; or identifying the most recent measurement is E = -1 and applying an S rotation. In order to rotate into an intermediate resource state, we act on the state with the Pauli S operator as a unitary when a 1 is measured, otherwise we do nothing. The effect of applying an S operator to an eigenstate of E is to flip the state, so if you are in the -1 eigenstate you go to the +1 eigenstate. This is analogous to Z and X operators. If we are in the $|-\rangle$ state, and we apply Z, then we end up in the $|+\rangle$ state.

Optionally, step (e) may comprise applying a unitary $e^{i\phi S}$, where $\phi$ is an appropriate rotation to undo the bit in the previous rotation in order to read out a bit in the current iteration.

Beneficially, the novel phase kickback mechanism discussed above may be extended to performing iterative phase estimation with some additional overhead to compute eigenvalues and eigenvectors of unitary circuits- resolution of individual eigenvalue eigenvector pairs.

Phase kickback is a generic subroutine and has use in quantum methods beyond phase estimation; for example in a version of quantum signal processing. Furthermore, APK could be naturally extended by finding ways to use multiple symmetry sectors to emulate controlled dynamics using multiple ancillas. Alternatively one could investigate the utility of a more general case for time dynamics simulation where only part of the Hamiltonian is reversed between symmetry sectors.

Optionally the extracted phase information is used in calculating energy levels in a representation of a physical system. Optionally the extracted phase information is used in performing a Hadamard test to estimate the overlap between two states. Optionally the extracted phase information is used in trace estimation. The evaluation of trace of an operator requires the aggregation of eigenvalues across the entire spectrum. Also disclosed herein is a control apparatus for a quantum information processor, the apparatus configured to efficiently simulate a fermionic system on the quantum information processor, the apparatus comprising a processor configured to perform the steps of any one of the preceding methods. Also disclosed herein is non-transient computer readable medium comprising instructions which cause a computer to enact the method steps of any one of the methods disclosed herein.

Also disclosed herein is a computer apparatus for determining phase information of a matrix representative of a quantum circuit, the computer apparatus comprising: a classical processor, configured to:

receive a unitary matrix, $U_M$, representative of a quantum circuit, U, which acts on a target set of qubits and identifying generalised Pauli operators, E and S associated with the unitary matrix, $U_M$, the matrices satisfying a first set of conditions:

$ES = -SE;\, EU_M = U_M^{-1}E;$ and $SU_M = U_M S$; define an input state $|\psi\rangle$ to the quantum circuit U represented by the unitary matrix $U_M$, wherein the input state $|\psi\rangle$ has support confined to the +1 or -1 eigenspace of S; perform operations to obtain phase information corresponding to the quantum circuit, U by: preparing a resource state $|\psi\rangle_r = |\psi\rangle + e^{ix} E |\psi\rangle$; and applying $U_M$ to the resource state a predetermined number of times to provide an output state encoding eigenvalues $e^{i\phi_i}$ of the quantum

circuit U.

In some examples, the classical processor performing operations to obtain phase information includes simulating the steps of preparing a resource state and applying $U_M$ the predetermined number of times on classical hardware. Beneficially, a classical computer can in principle simulate, provided the classical computer has sufficient computational resources, any calculation that may be performed by a quantum computer. Generally the required classical resources scale exponentially as the quantum computer scales up, so it is advantageous to employ quantum computers in some cases. The protocols and apparatus described herein yield improvements even using a classical simulation of a quantum computer insofar as the reductions induced reducing gate count and qubit numbers also improves the efficiency of the classical simulation.

In other examples, the control apparatus may further comprise a quantum information processor, the classical processor and the quantum information processor being communicatively coupled with one another, and wherein the classical processor performing operations to obtain phase information includes: the classical processor providing control signals to the quantum information processor to cause the quantum information processor to enact the steps of preparing a resource state and applying $U_M$ the predetermined number of times.

In such examples, the classical processor is further configured to receive information from the quantum information processor once the quantum information processor has enacted the steps of preparing a resource state and applying $U_M$ the predetermined number of times, to read out the encoded eigenvalues. The apparatus described herein may be configured to enact any of the methods described herein.

In examples where the apparatus comprises a quantum computer, the input states and resource states may be physical quantum states stored in quantum memory. Such input states may have been produced by any number of procedures familiar to the skilled person. These procedures include for example: a simple state preparation protocol which produces a known quantum state which could be efficiently described classically; a more complicated quantum algorithm which produces an unknown quantum state that might not be efficiently described classically; taken from some quantum memory that has been initialized by some known or unknown source. Beneficially, the apparatus described herein allow determination of phase information of a matrix describing a quantum circuit be it with a classical simulation of a quantum circuit or using real quantum hardware, with the corresponding advantages to those identified above with regard to the method.

The disclosure also extends to any novel aspects or features described and/or illustrated herein. In this specification the word 'or' can be interpreted in the exclusive or inclusive sense unless stated otherwise.

Brief Description of Drawings

In order that the disclosure can be well understood, aspects and embodiments will now be discussed by way of example only with reference to the accompanying drawings, in which:

**Figure 1** shows a schematic diagram of a known form of standard phase estimation;

**Figure 2** shows a schematic diagram of a known form of statistical phase estimation;

**Figure 3** shows a method for performing algebraic phase kickback;

**Figure 4** shows a method for modifying a circuit such that phase kickback can be performed;

**Figure 5** shows a method for performing algebraic statistical phase estimation using algebraic phase kickback ;

**Figure** 6 shows a method for performing algebraic standard phase estimation using algebraic phase kickback;

**Figure 7** shows an energy spectrum of $p_s$, a state maximally mixed over the stabilizer states, i.e.,

computational basis states with even parity;

**Figure 8** shows an example connectivity graph of a seven qubit device;

**Figure 9** shows a schedule to implement two trotter layers of the time evolution operator;

**Figure 10** shows a Fourier analysis of time series of $\rho_s$;

**Figure 11** shows the total variation distance of the experimentally measured spectrum of $\rho_s$; and

**Figure 12** shows an example system for performing any of the methods disclosed herein.

It should be noted that many of the figures are diagrammatic and may not be drawn to scale. Relative dimensions and proportions of parts of these figures may have been shown exaggerated or reduced in size, for the sake of clarity and convenience in the drawings. The same reference signs are generally used to refer to corresponding or similar features in modified and/or different embodiments.

Detailed Description

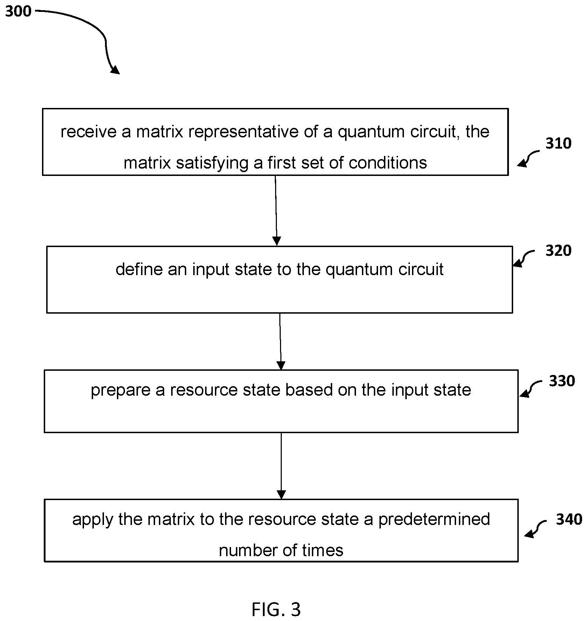

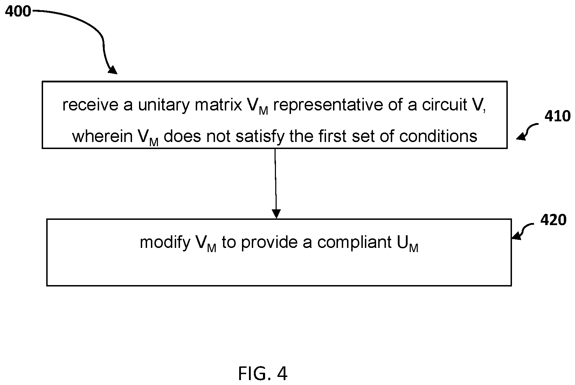

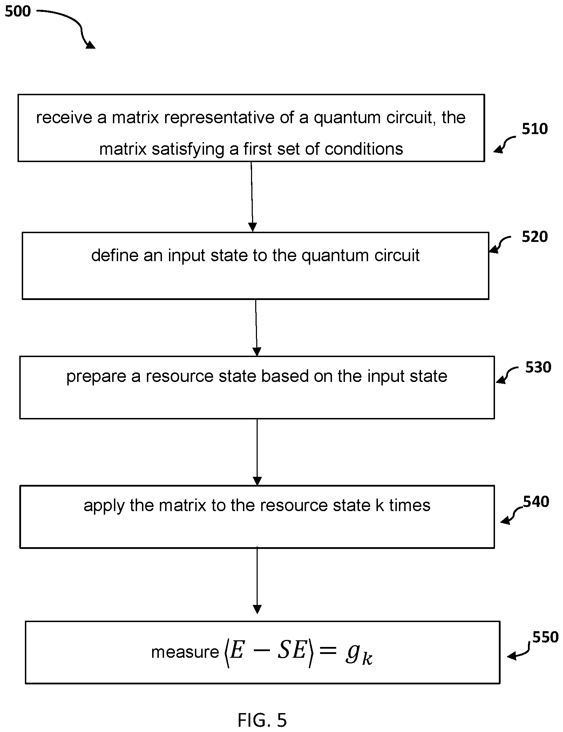

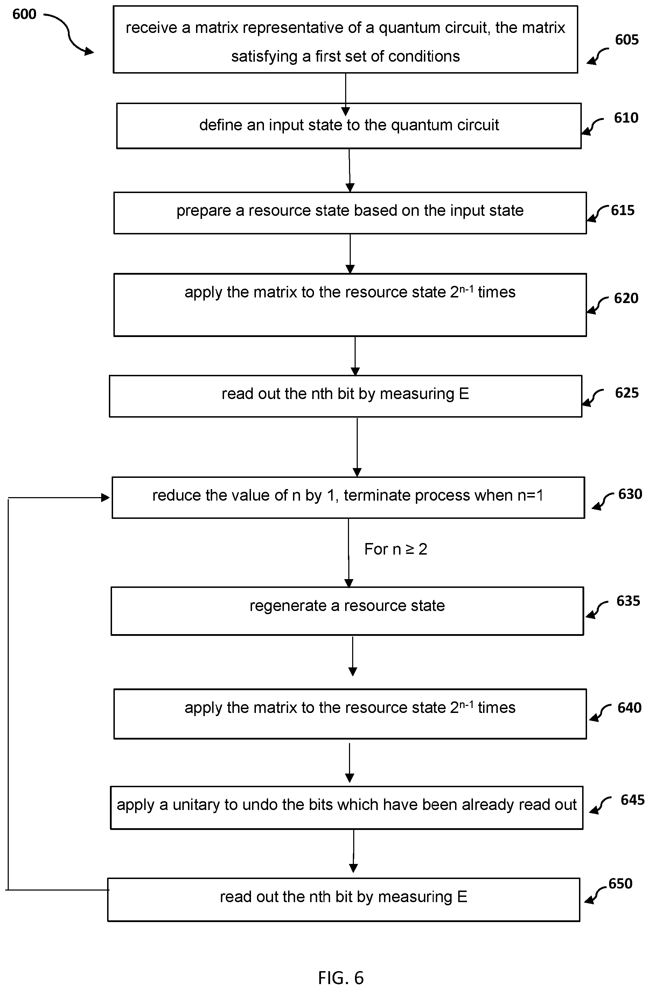

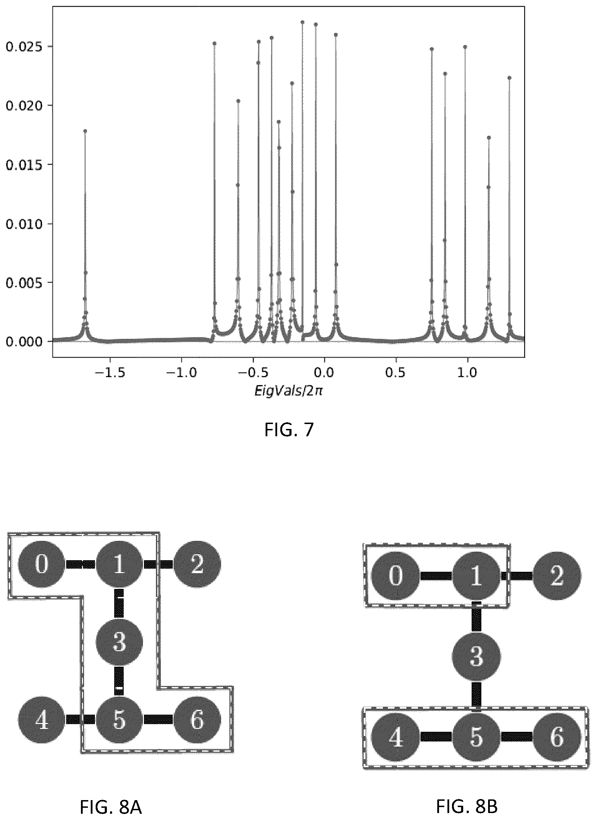

The systems and methods described herein relate to an improved phase kickback subroutine in quantum computing (with reference to Figure 3), modifying circuits to be compatible with the improved method of phase kickback (with reference to Figure 4) and the use of the improved subroutine in phase estimation (with reference to Figures 5 and 6). Figures 7 and onwards pertain to specific implementations and experimental results as well as example hardware.

Figure 3 shows an improved method 300 of phase kickback, referred to herein as Algebraic Phase Kickback (APK) which enables the performing of control free phase kickback on the square of a target unitary without introducing any additional qubits. Uniquely, this method of phase kickback does not require any prior knowledge of the eigenstates of the target unitary, and can be executed on mixed states. APK is limited to a specific subclass of unitaries satisfying certain algebraic properties, namely those unitaries whose generating Hamiltonian satisfies an anti-symmetry *EH = -HE,* and a symmetry *SH = HS* for some pair of operators *E* and *S* such that *SE = -ES*. However, any Trotterized time dynamics circuit can be modified in accordance with the methods described herein with reference to Figure 4.

APK leverages existing anti-symmetry *EH = -HE* of a system to identify a forward time evolution and backwards time evolution subspace. A superposition is prepared across these two subspaces and unitary dynamics is applied to a relative phase corresponding to twice the phase accumulated by the forward time evolution. The inventors have found that by leveraging an existing generic transformation *E, S* can be observed between the two subspaces and phase kickback can be achieved without explicit knowledge of the input state or its corresponding reference state. Thus, the protocol can be performed on any input state, including mixed states, provided it is restricted to one of these subspaces. The primary cost of the described novel APK method is the preparation of this superposition between the subspaces at the start of the routine which typically requires generating entanglement across many of the qubits involved.

Although APK is a generic routine, it is particularly valuable as a subroutine in statistical phase estimation (described in more detail with reference to Figure 5), where almost no coherent operations on the control degree of freedom are required. It is also discussed later on how APK may be straightforwardly deployed in the iterative phase estimation protocol (with reference to Figure 6), and the cost benefits this may introduce.

To demonstrate the efficacy of the method, details of a small scale demonstration of the routine on an IBM superconducting quantum computer are included below. As expected, it is found that that algebraic statistical phase estimation performs significantly better than standard statistical phase estimation as it does not require a control line.

APK is particularly valuable since the subroutine at the heart of both IPE an SPE is phase kickback.

In typical phase kickback, a controlled unitary is applied to the state $|+\rangle |\phi\rangle$ where $|\phi\rangle$ is an eigenstate of unitary $U$ with eigenphase $e^{i\phi}$, producing the state:

$$\text{c-}U|+\rangle|\phi\rangle = \frac{1}{\sqrt{2}}\left(|0\rangle + e^{i\phi}|1\rangle\right)|\phi\rangle \qquad (4)$$

where the eigenphase has been "kicked back" into the control qubit. This extends to a superposition of eigenstates by linearity. Consider a modified phase kickback routine where the control register controls the application of $U$ or $U^{\dagger}$:

$$bc - U = |0\rangle\langle 0| \otimes U + |1\rangle\langle 1| \otimes U^{\dagger} \qquad (5)$$

when applied to a state $|+\rangle |\psi\rangle$ where $|\psi\rangle$ is some superposition over eigenstates of $U$ the routine produces the state:

$$bc - U|+\rangle|\psi\rangle = \sum_{\phi} \frac{\alpha_{\phi}}{\sqrt{2}}\left(e^{i\phi}|0\rangle + e^{-i\phi}|1\rangle\right)|\phi\rangle \qquad (6)$$

$$= \sum_{\phi} \frac{\alpha_{\phi}'}{\sqrt{2}}\left(e^{i2\phi}|0\rangle + |1\rangle\right)|\phi\rangle \qquad (7)$$

where $\alpha'_{\phi} = e^{-i\phi}\alpha_{\phi}$ in a similar fashion to how the state described by equation (4) is used in SPE and IPE to learn phase estimation about U, the state in equation (7) can be used to learn phase information about $U^2$, due to the doubling of the angle..

The primary observation underlying this invention is that under certain circumstances phase kickback of this kind need not employ a controlled operation using an ancillary qubit, and that instead a symmetry can be engineered within the target circuit which can achieve this effect at a reduced cost. With this in mind, consider a unitary U and Hermitian unitaries E and S which have the following forms in some basis:

$$U = \begin{pmatrix} V & 0 \\ 0 & V^\dagger \end{pmatrix}, \quad E = \begin{pmatrix} 0 & \mathbb{1} \\ \mathbb{1} & 0 \end{pmatrix}, \quad S = \begin{pmatrix} \mathbb{1} & 0 \\ 0 & -\mathbb{1} \end{pmatrix}. \qquad (8)$$

Let W be the subspace such that $U|_W = V$, for a state $W \ni |\psi\rangle = \Sigma_\phi \alpha_\phi |\phi\rangle$ where $|\phi\rangle$ are eigenstates of U, we have:

$$U(|\psi\rangle + E|\psi\rangle)/\sqrt{2} \quad = (V|\psi\rangle + V^\dagger E|\psi\rangle)/\sqrt{2} \qquad (9)$$

$$= \sum_\phi \frac{\alpha'_\phi}{\sqrt{2}} \left( e^{i2\phi}|\phi\rangle + E|\phi\rangle \right) \quad ,(10)$$

which shares a similar structure to equation 7. In standard phase kickback, the phase is accessed and manipulated by measurements of and rotations about the operators $X$, $Z$ and $Y$. In a directly analogous way the phases in APK can be accessed and manipulated by measurements of and rotations about the operators $E$, $S$ and $iES$ respectively. The structure in equation 8 is guaranteed by some simple algebraic properties of $E$ and $U$.

Algebraic Phase Kickback (APK)

**Theorem 1:** Let *U and E be unitary with E Hermitian and U preserving a subspace W. There exists Hermitian unitary S such that U, E and S have the structure in equation 8 the subspace W $\oplus$ EW if and only if the following hold,*

$$\Pi_{\mathbf{W}} E \Pi_{\mathbf{W}} \quad = 0, (11)$$

$$\Pi_{\mathbf{W}} EUE \Pi_{\mathbf{W}} \quad = \Pi_{\mathbf{W}} U^\dagger \Pi_{\mathbf{W}}, \qquad (12)$$

*where $\Pi_W$ is the projector into W.*

In a vacuum the APK protocol is an algebraic generalization of the standard controlled kickback described in equation 7. In some examples, in particular when Trotterized time dynamics circuits are concerned, the symmetries described here are often already present. Furthermore, when they are not present they may be engineered with only a small overhead (described, for example, with reference to Figure 4). The benefit of this is that APK may be deployed on a Trotterized time dynamics circuit without incurring the cost of having a control on every Hamiltonian term. The trade-off is that a resource state of the form ($|\psi\rangle + E|\psi\rangle$) must be prepared, as discussed in more detail with reference to Figure 5 (see the section titled 'Costs and trade-offs' for a more in-depth discussion of these cost trade-offs).

Figure 3 shows a method 300 for performing algebraic phase kickback on a quantum circuit. At step 310 a unitary matrix $U_M$ representative of a quantum circuit is received. The received unitary matrix satisfies a first set of conditions: $ES = -SE$, $EU_M = U_M^{-1}E$, and $SU_M = U_M S$, as specified above. In preferred examples, E and S are multi-qubit Pauli operators, but it is of course understood that the examples described herein could also apply to single-qubit Pauli operators.

At step 320, an input state, $|\psi\rangle$ to the quantum circuit is defined, the input state, $|\psi\rangle$ having support confined to the +1 or -1 eigenspace of S. In some examples, the input state is in the +1 eigenspace of S. In other examples, the input state is in the -1 eigenspace of S. Importantly, provided a determination is made as to a confinement to one of the +1 or -1 eigenspace, the Hilbert space is cut in half and the technical effect of reduced cost by eschewing the requirement for a control operation is achieved.

At step 330, a resource state $|\psi\rangle_r$ based on the input state is prepared according to $|\psi\rangle_r = |\psi\rangle + e^{ix}E|\psi\rangle$ where x can be any real number. For example, a resource state may be prepared with the form $|\psi\rangle_r = e^{i\pi/4E}|\psi\rangle$. it is of course understood that the phase of the resource state is dependent on the operation performed to obtain the resource state and that a resource state with a different phase x, other than the one produced by applying $e^{i\pi/4E}$ could be obtained.

At step 340, the matrix $U_M$ is applied to the resource state a predetermined number of times and an output state encoding eigenvalues $e^{i\phi_i}$ of the quantum circuit U is provided. The application of the matrix to the resource state is dependent on the context in which APK is applied and thus so is the resolution of the output state. For example, statistical phase estimation does not allow for the resolution of individual eigenvalue eigenvector pairs and instead retrieves the spectral distribution of the circuit weighted by the support on the input state. If there is a requirement for individual eigenvalue and eigenvector pairs to be resolved, algebraic phase kickback can instead be applied to standard phase estimation (also referred to herein as iterative phase estimation).

In some examples, the input state $|\psi\rangle = \Sigma_i \alpha_i |\phi_i\rangle$ is a superposition of eigenvectors $|\phi_i\rangle$ of the matrix $U_M$

representative of the quantum circuit with eigenvalues $e^{i\phi_i}$. In such cases, applying the target circuit to the resource state yields: $U_M|\psi\rangle_r = \Sigma_i\alpha_i(e^{i\phi_i}|\phi_i\rangle + e^{-i\phi_i}iE|\phi_i\rangle) = \Sigma_i e^{-i\phi_i}\alpha_i(e^{i2\phi_i}|\phi_i\rangle + iE|\phi_i\rangle)$. This specific implementation is in no way limiting and as discussed above, it is not a requirement of the input state to be a superposition of eigenvectors $|\phi_i\rangle$ of $U_M$. We expand step 340 in more detail with reference to IPE and SPE protocols below.

Algebraic Phase Kickback for Time Dynamics

When simulating evolution under some physical Hamiltonian often only a subspace of states are of interest, this may be due to symmetries of the Hamiltonian or because it is encoded in some kind of codespace, as may be the case when simulating fermionic systems on qubits or when H is a logical operator in an error correcting/detecting code. In such cases, there is a likelihood of an evolution unitary having the properties that allow for the use of APK.

For $H = \Sigma_i \lambda_i P_i$ for Paulis $P_i$ it suffices to find Paulis E and S such that

$$E, P_i = E, S = [S, P_i] = 0, \quad \forall P_i. \tag{13}$$

The +1 eigenspace of S defines a subspace left invariant by the evolution and $E$ and $e^{-iHt}$ satisfy the conditions in Theorem 1, meaning APK can be used. Under the following conditions, a Hamiltonian is automatically compatible with APK in the above sense.

**Theorem 2.** *A Hamiltonian $H = \Sigma_i \lambda_i P_i$ is equipped with Paulis E and S with the properties in equation 13 if and only if no $P_i$ is an even product of $P_j$ $j = i$ and if there exists a Pauli commuting with H that is not an even product of $P_i$.*

Often a Hamiltonian H may not admit an S and E with the properties described above. However it is possible to "fix" this by decorating terms in H to act on additional qubits, set in a neutral starting state, until this is possible. Figure 4 shows an example method 400 for modifying a circuit such that algebraic phase kickback can be performed. Method 400 may, for example, be performed on a classical computer to modify the instructions provided to a quantum computer. In some cases, the modifications to the circuit may be controlled by a user providing commands to the classical computer to cause the modifications to be provided to the quantum computer. In step 410, a matrix $V_M$ representative of a circuit V is received, wherein $V_M$ does not satisfy the first set of conditions. At step 420, matrix $V_M$ is then modified to provide a matrix $U_M$ for which generalised Pauli operators, E and S do exist which satisfy the first set of conditions. Step 420 of modifying $V_M$ to provide $U_M$ comprises: introducing one or more ancillary qubits; identifying unitary matrix $U_M$ acting jointly on the target and one or more ancillary qubits; identifying a target input state $|\psi'\rangle$ such that: $|\psi'\rangle = |\psi\rangle|a\rangle$ where $|a\rangle$ is a state encoded on the one or more ancillary qubits; $S |\psi'\rangle = |\psi'\rangle$; and $U |\psi'\rangle = V|\psi\rangle|a\rangle$.

In some examples, the generator of $V_M$ (generating Hamiltonian) is known and is expressible as a sum of operators , $H = \Sigma_j h_j$. In such examples, V can be expressed as $V = e^{\{iH\}} + \varepsilon$, since there are a plurality of known protocols in the art to find $e^{\{iH\}}$ of the generator. Any appropriate one of these known protocols may be followed and $\varepsilon$ is small enough that it does not need to be known but simply indicates that $e^{\{iH\}}$ cannot be hit exactly. Therefore, given V and a generator, the generator can always be written as an expansion of terms $\Sigma_j h_j$. In such examples ancillary qubits are introduced and a set of operators $P_j$ are identified such that each $P_j$ acts on the ancillary qubits;

$P_jP_k=P_kP_j$ for all (j,k); and E and S satisfy the first set of conditions for H'. In such examples, H' = $\sum_j h_j' = h_j \otimes P_j$ ; $U_M$ is equal to $e^{iH'} + \varepsilon$'; $|\psi'\rangle$ is equal to $|\psi\rangle \otimes |a\rangle$; and $|a\rangle$ is a common +1 eigenstate of all $P_j$.

The inventors have found a plurality of solutions of different efficacy for modifying a circuit $V_M$ to a circuit $U_M$ such that algebraic phase kickback can be performed. In one example, one ancillary qubit is added and every Pauli term of H acted on it with a Z, setting the starting state to be 10) on the ancillary qubit and then setting E and S as X and Z on that qubit. In another example, $P_j$ are chosen to minimize the cost of executing the circuit Unn. In another example, the number of indices j for which $P_j=1$ is maximized.

In a preferred example, E is found such that E anti-commutes with some subset $\Omega E$ such that $\Omega E$ is as large as possible. An ancillary qubit is introduced and for each term not in $\Omega E$, the term acts with a Z operator on the ancillary qubit. E is modified so that it acts with a X operator on the ancillary qubit. Define S =Z on the ancillary qubit. In this way S and E anti-commute , S commutes with all terms, and E anti-commutes with all terms. Finally set all ancillary qubits to start in the 10) state, so that the true dynamics of H is preserved. Beneficially, this preferred example uses only one additional qubit. In terms of the examples discussed above, this can be thought of as an explicit construction in which an ancillary qubit a is introduced and for each $h_n$ , $P_n = Z_a$ on qubit a, and setting $S = Z_a$ and $Q = X_a$ . This allows for the use of a single ancillary qubit to be used to implement the method, albeit that ancilla qubit requiring support over a large number of the data qubits. Nevertheless, the various examples discussed herein provide flexibility to the user of the system, since the user can trade off complexity of the quantum calculation for reduced qubit numbers required.

In another example, E is found such that E anti-commutes with some subset $\Omega E$, such that $\Omega E$ is as large as possible. for each term not in $\Omega E$ associate to it a new ancillary qubit and the term acts with a Z operator on its associated ancillary qubit. E is modified so that it acts with an X operator on every ancillary qubit. Define S =Z on any ancillary qubit. In this way S and E anti-commute , S commutes with all terms, and E anti-commutes with all terms. Finally set all ancillary qubits to start in the 10) state, so that the true dynamics of H is preserved. This example uses only as many additional new qubits as terms not in ΩE in exchange for the benefit of retaining the locality of terms in the Hamiltonian. In such examples, implementing this includes implementing the following steps: For each $h_n$ in the second subset ,an ancillary qubit $q_n$ is introduced. In such cases, the method further comprises: setting $P_n = Z_{qn}$ on the qubit $q_n$; setting S = $Z_{qn}$ for a choice of $q_n$; and setting Q = $\otimes_{qn} X_{qn}$. This is advantageous because it allows retaining of the locality of terms in the Hamiltonian. The choice of $q_n$ referred to here is a free choice of whatever is most convenient for the user. The notation $\otimes_{qn}$ is of course, used to represent $X_{q1} \otimes X_{q2} \otimes ... \otimes X_{qn}$ throughout the disclosure.

In terms of the examples discussed above, a method for implementing this idea to adapt a "non-compliant" unitary into a unitary to which the methods disclosed herein can be applied (i.e. converting a non-compliant unitary to a compliant one) can be thought of as , modifying $V_M$ to provide $U_M$ by identifying a first subset, $h_m$ of $h_j$ for which there exists a Pauli operator F such that for each $h_m$: $h_m F = -F h_m$, and identifying a second nonempty subset $h_n$ of $h_j$, wherein $h_m$ and $h_n$ are compliment subsets. From here ancillary qubits are introduced and each is associated with each term $h_n$ in the second subset a corresponding Pauli operator $P_n$. Next, Pauli operators Q and S are identified such that: $P_n P_{n'} = P_{n'} P_n$ for all (n,n'); $QP_n = -P_n Q$ for all n; $Qhm = h_m Q$ for all $h_m$ in the first subset; S Q = - Q S; $h'_n = h_n \otimes P_n$; E = F⊗ Q; $|\psi'\rangle$ is equal to $|\psi\rangle \otimes |a\rangle$; and $|a\rangle$ is a common +1 eigenstate of all $P_n$. This is advantageous because given a non-compliant V a minimal modification of V can be identified identified so that it complies. This modification involves introducing ancillary qubits and modifying $h_j$ so that they act on these qubits so that the new unitary U generated by the modified $h_j$ has an E and S which comply with APK, and furthermore the ancillary qubits are set to start in a state so that U acts like V on the original target qubits. The important point is that the number of additional qubits that need to be added, and the number of $h_j$ that need to be modified is minimized by identifying the largest subset $h_j$ that do satisfy the requisite conditions, and then only needing to modify the remaining $h_j$ not in that subset.

Application of algebraic phase kickback to phase estimation

iterative and Statistical Phase Estimation

APK reproduces phase kickback on a single control register and is therefore particularly effective for use in phase estimation routines that use a single ancillary control qubit: Iterative Phase Estimation (IPE) and Statistical Phase Estimation (SPE) (schematic diagrams of the prior scheme are shown in Figures 1 and 2 respectively) extract information about the eigenvalues of a target unitary U using phase kickback on a control line. The primary difference between them is that IPE extracts this information via a compressed quantum Fourier transform on the control line while SPE extracts this information by performing a classical Fourier transform on a sequence of measurements of the control line.

More concretely, supposing as input an eigenstate $|\phi\rangle$ with phase eigenvalue $e^{i\phi}$ (which may be generalized to a superposition by linearity). In IPE the binary expansion of the phase $\phi = . \phi_1 \phi_2 ... \phi_p 2\pi$ is read out by applying a coherent sequence of controlled unitary operations $U^{2n-1}$ to the state $|\phi\rangle$, in decreasing order from n = p to n = 1. After each controlled execution of $U^{2n-1}$, a shifted binary phase . $\phi_n \phi_{n+1} ... \phi_p 2\pi$ will be stored in the control register via phase kickback:

$$c - U^{2^n-1}|+\rangle \, | \, \phi \, \rangle = \tfrac{1}{\sqrt{2}}(|0\rangle + e^{i.\phi_n \phi_{n+1}...\phi_p 2\pi}|1\rangle)| \, \phi\rangle \qquad (14)$$

A Z rotation by an angle $\theta = -\phi_{n+1} ... \phi_p 2\pi$ given by the previously measured subleading bits yields the state $\tfrac{1}{\sqrt{2}}(|0\rangle + e^{i.\phi n 2\pi}|1\rangle)$ in the control register from which the bit $\phi_n$ can be measured by a Pauli X measurement.

The control register is subsequently reset to the $|+\rangle$ state so that the next phase kickback sequence can be applied. In SPE a controlled execution of $U^n$ is applied to the input state $|+\rangle \, |\phi\rangle$ to produce a phase kickback $c\text{-}U^n |+\rangle \, |\phi\rangle = \tfrac{1}{\sqrt{2}} (|0\rangle + e^{in\phi} |1\rangle)|\phi\rangle$ . Measuring $\langle x + iy\rangle$ on the control line yields the classical signal $g(n) = e^{in\phi}$ for a sequence of values n. A classical fast Fourier transform may then be applied to this signal to approximate the spectral distribution $G_{(\omega)} := F[g] \approx \delta(\omega - \phi)$. This generalizes to superpositions and mixed states p with $g(n) = \Sigma_\phi e^{i\phi n} \langle \phi|p|\phi\rangle$ and $G_{(\omega)} \approx \Sigma_\phi \delta(\omega - \phi)\langle\phi|p|\phi\rangle$. The approximation will depend on the number of samples n.

Algebraic Phase Estimation

Algebraic phase estimation (APE) is the application of APK in either IPE and SPE assuming the target unitary U satisfies the conditions of theorem 1 and the target input state is restricted to be in the subspace W. Schematically this constitutes substituting the X and Z operators on the control line with the $E$ and $S$ operators (resp.) in APK.

Figure 5 shows a method 500 for performing algebraic statistical phase estimation using algebraic phase kickback. At step 510 a matrix $U_M$ representative of a quantum circuit, the matrix satisfying a first set of conditions is received. At step 520 an input state to the quantum circuit is defined. At step 530 a resource state based on the input state is prepared. At step 540, the target unitary is applied to the resource state k times. Of course, it is understood that applying $U_M$ to the resource state a predetermined number of times can be thought of as repeatedly applying $U_M$ to the resource state m times, or equivalently, applying $(U_M)^m$ to the resource state. Mathematically, this can just be performed by calculating $(U_M)^m$ and applying that operator to the resource state. In physical hardware, while it may be possible to construct a circuit representing the operation $(U_M)^m$, this is equivalent to alternatively setting up a circuit to implement $U_M$, and feeding in the resource state, looping the output of the $U_M$ circuit back into the input and repeating this until the circuity has been executed m times in total. Note that in this latter example, each time the circuit is executed, the input state has in general changed from the input used on the previous iteration. Nevertheless this is equivalent to the $(U_M)^m$ options discussed above.

In algebraic statistical phase estimation, APK is applied as in equation 10 for a target unitary $U^k$ yielding the state:

$$U^k \frac{1}{\sqrt{2}}(|\phi\rangle + E|\phi\rangle) = \frac{1}{\sqrt{2}}\left(e^{i2k\phi}|\phi\rangle + E|\phi\rangle\right)$$ At step 450 $(E - SE) = g_k$ is measured. Measuring (E + ES) yields $g(k) = e^{i2k\phi}$. Doing this for a sequence of values k yields a signal to which a classical Fourier transform may then be applied. By linearity the protocol may be applied to any input state (pure or mixed) $\rho$ which is restricted to be in W, with $g(k) = \Sigma_\phi e^{i2\phi k}\langle\phi| p|\phi\rangle$ and $G_{(\omega)} \approx \Sigma_\phi \delta(\omega - 2\phi)\langle\phi|p|\phi\rangle$. Notably there is an additional factor of 2, which may introduce complications for certain target unitaries, however in the case of time dynamics simulation this can be offset by a smaller time step $\delta$. The parameter k corresponds to a time wherein each execution of the circuit corresponds to a small timestep and wherein executing the circuit k times, corresponds to evolving for time k * the small timestep. k may therefore be determined based on a desired granularity to which a user may want to resolve the spectrum. The resolution of the signal g(k), i.e. its ability to resolve finer grained details of the spectrum (eigenvalues) depends on the maximum time value for which the signal can be produced. Typically, the longer the time you want to produce a signal for, the deeper the circuit required. By removing the control ancilla and reducing the circuit cost of a time step, a larger circuit may be achieved for a given cost such that a longer time evolution can be produced with a given device and resolve finer grained spectral details.

Algebraic iterative phase estimation is slightly more complicated. This is because coherence need to be maintained between each application of $U^{2n-1}$, and also that our phase kickback circuit kicks back twice the phase. Figure 6 shows a method 600 for performing standard algebraic phase estimation using algebraic phase kickback. The first few steps are the same as those in methods 100 and 400, at step 605 a matrix representative of a quantum circuit, the matrix satisfying a first set of conditions is received. At step 610 an input state to the quantum circuit is defined. At step 615 a resource state is prepared based on the input state. Unlike previous methods however, at step 620 the matrix $U_M$ is applied to the resource state $2^{n-1}$ times. At step 625, the nth bit is read out by measuring E.

At step 630, the value of n is reduced by 1 with the proviso that the process terminates if reducing n by one results in n=1. Otherwise, if n≥2, the method proceeds to step 635, in which a resource state is regenerated, wherein regeneration of a resource state comprises generation of an intermediate resource state, i.e. the regenerated resource state has the same phase as the initial resource state, meaning that subsequent measurements of bits of the fractional part of the phase are coherent and lead to a bit-by-bit extraction of the phase of the initial resource state. At step 640 the matrix $U_M$ is applied to the resource state $2^{n-1}$ times and at step 645 a unitary is applied to apply an appropriate rotation to undo the bits which have already been read out. At step 650 the nth bit is read out by measuring E. The method 600 then iterates between steps 630 to 650, each time subtracting one from the value of n wherein the final iteration is performed while n is equal to 2, and terminates after the 2nd bit has been read out. This is ensured in the process of Figure 6 by the conditional statement for n=1 in step 630, but in other cases, it may be implemented by checking the value of n when a bit is measured and terminating the process after a bit has been read out while n=2. In some examples, each iteration reads out a progressively more significant bit. In some examples, the execution of step 645 includes applying a unitary $e^{i\phi S}$, where $\phi$ is an appropriate rotation to undo the bit in the previous rotation in order to read out a bit in the current iteration.

In some examples, an initial resource state of $1/\sqrt{2}(|\phi\rangle + E|\phi\rangle)$ is prepared in step 615 and between each application of $U^{2n-1}$ a rotation of $e^{iS\theta}$ for $\theta = -\phi_{n+1} ... \phi_p 2\pi$ is executed, followed by coherent measurement of E. In such examples, step 630 comprises regenerating the resource state based on a coherent measurement of E where a measurement of E = +1 indicates that a target resource state is retained, whereas a measurement of E = -1 indicates that a correction needs to be performed by either actively applying S or passively entering into a rotated Pauli frame by appropriately modifying subsequent operations.

The final output is the set of bits $\phi_{n+1}$ to $\phi_p$ with $\phi_n$ not retrievable since only twice the phase is kicked back. The output state is the projector into the subspace spanned by those eigenstates compatible with the measured 2nd to $p^{th}$ bits. In principle the final bit $\phi_1$ can be retrieved by first projecting or rotating into the S = +1 subspace, and then performing the last step as you would normally with standard IPE. In this case the bulk of the circuit would be dominated by $U^{2n-1}$ for large n and so the cost benefits of using APE for those steps may still be appreciable.

By linearity, both SPE and IPE (described above with reference to Figures 5 and 6) may be applied to any input state (pure or mixed) $\rho$ which is restricted to be in W. However even if $\rho$ is not guaranteed to be in W, we may perform a coherent projective measurement of $S$ to retrieve p|s = $\pm$ *projected into either W or EW and proceed as usual provided we changed our conventions from S -> -S when we find S = - 1.* In either case we may proceed with applying either of the above protocols without losing any of their algorithmic potency. In the case of statistical phase estimation we can retrieve the signal g(n) = Tr[Up] by taking a linear combination of the signals $g_+(n)$ = Tr[$U_p$|s=$_{+1}$] and g-(n) = Tr[$U_p$|s=$_{-1}$]:

g(n) = P(S = +1)$g_+$(n) + P(S = -1)g_(n).For algebraic iterative phase estimation the process 660 of measuring/ reading out the bits of $\phi$ has the effect of repeatedly projecting the input state into a smaller and smaller eigenspace compatible with the measured bits, with the probability of projecting into that subspace determined by the support of the input state. Performing a projective measurement of S beforehand completely commutes with this process since S commutes with $U$, and so the outcome is nearly the same, with the only caveat being that the output state is guaranteed to also be an eigenstate of S.

The extracted phase information from either protocol may be used for any number of further protocols or calculations. For example, in some implementations the extracted phase information is used in calculating energy levels in a representation of a physical system. In other implementations, the extracted phase information is used in performing a Hadamard test to estimate the overlap between two states. In other implementations, the extracted phase information is used in trace estimation.

Costs and trade-offs

A primary cost of standard phase kickback is the need to control the unitary in question on a single ancilla. On hardware with limited connectivity high support unitaries will require the use of swap networks to bring qubits close to the control register and with any amount of device connectivity the protocol requires controlled versions of the operations used in the unitary, likely leading to greater noise than its uncontrolled implementation. As well as this, controlling on a single qubit will require any previously parallelisable components of the unitary to be applied in series, greatly increasing the circuit depth and adding further system size scaling to this. These problems can be mitigated by using multiple ancillas throughout the system and preparing them in a GHZ state and controlling nearby operations on nearby ancillas. This comes at the cost of preparing the entangled state across the ancillas and the requirement of a growing number of qubits as the system size increases. As discussed above, the advantage of using APK to perform phase estimation or similar procedures is the fact that the unitary in question does not need to be controlled at all, thus eliminating the costs associated with this. However this advantage comes at the cost of preparing the resource state required for the algebraic phase kickback to work. Furthermore, depending on the algorithm using kickback, the measurements of the $E$ and S operators may incur additional cost vs the single qubit measurements in conventional implementations. We discuss these issues below.

Resource State Preparation

To implement APK on a general state $\rho \in$W the resource state required is:

$$\sigma = \frac{1}{2}(1 + E)\rho(1 + E). \qquad (15)$$

In some examples, this state is prepared by performing a unitary rotation $e^{-ES\pi/4}$. This may be costly if the unitary being estimated has large support. Take the time dynamics example discussed above, the E is a (generalised) Pauli which commutes with every term in H, necessarily E must have support across the whole system that H acts on and so the complexity of implementing the rotation about ES (which has the same anticommutation properties) will scale with the system size. $e^{-iE\pi/4}$ or any rotation which prepares a state of the form

$$\sigma = \frac{1}{2}\left(1 + e^{i\theta}E\right)\rho\left(1 + e^{-i\theta}E\right) \qquad (16)$$

The expectation $\langle E + ES \rangle/2$ with respect to this state yields $e^{i\theta}\langle U^2 \rangle$ from which one can easily obtain $\langle U^2 \rangle$ with knowledge of $\theta$.

In another example, a resource state may be prepared by coherently measuring $E$ on the state $\rho$.

In the case of a +1 outcome measurements of E and ES should be recorded as usual, in the case of a -1 outcome one has prepared the state in equation 16 with $e^{i\theta}$ = -1 and so -$E$ and -$ES$ should be measured. This is also costly for the same reason as the unitary preparation method, coherently measuring $E$ when it has support across the system will incur a system-size scale cost, arguably more than the unitary method as entanglement with a readout qubit will be required.

When the state of interest is a mixed state the use of APK can be cheaper still. Consider the case where $E$ and $S$ are Paulis and the space $W$ and $EW$ from theorem 1 constitute the whole space. Say $\rho = \Pi W$/ dim(W), the maximally mixed state over *W*. The resource state required for APK is:

$$\sigma = \frac{1}{2}(1+E)\frac{(1+S)}{\dim(H)}(1+E) = \frac{(1+E)}{\dim(H)} \qquad (17)$$

This is simply the uniform distribution of +1 eigenstates of E, if E is a Pauli operator then this can be obtained by sampling randomly from product states. In this case no coherent dynamics are required at all to prepare the resource state.

One may be interested in the maximally mixed state over a smaller symmetry sector than the +1 space of S. For instance, the subspace of interest may be the +1 space of multiple stabilizer operators or a natural symmetry sector of a Hamiltonian; when probing time evolution in a fixed particle number sector under a fermionic Hamiltonian encoded using a local encoding both these cases will apply. Considering mixed state over a stabilizer subspace the resource state will be:

$$\sigma = \frac{1}{2}(1+E)\frac{\prod_{S_i \in \mathcal{S}}(1+S_i)}{\dim(\mathcal{H})}(1+E) \qquad (18)$$

where S is a generator of the stabilizer group. The *S* operator used in APK can be taken to be the stabilizer generator $S1$ it is then possible to choose a generator S such that $S \setminus S1$ commutes with $E$, e.g. if $Si$ anti commutes with $E$ replace it with $S_1 S_i$. The resource state can then be written as

$$\sigma = \frac{(1+E)\prod_{S_i \in \mathcal{S} \setminus S_1}(1+S_i)}{\dim(\mathcal{H})} \qquad (19)$$

where we have used the relation apparent in equation 17. One way to prepare this state is to sample from the product state distribution which forms the state proportional to $(1 + E)$ and coherently measuring the generators in $\mathcal{S} \setminus S_1$. Of course only +1 results from all the measurements of the $S_i$ will project into the above state and postselecting on this outcome would require a number of experiments exponential with the stabilizer rank however this can be circumvented. When the measurements project into a syndrome space where some stabilizers act as -1, the logical operators of the code can be redefined to account for this and an altered version of the unitary can be implemented to achieve the same kickback effect as in the actual codespace. A logical Pauli can be represented as $\tilde{P}\prod_{S_i \in \mathcal{S}} S_i^{b_i}$ where where $\tilde{P}$ is some consistently chosen "undressed" form of the operator and $\vec{b}$ is any binary vector of length $|\mathcal{S}|$. In a syndrome space where some $S_i$ are -1 one can multiply these $S_i$ by -1 in this product, this new operator in this syndrome space will have the same effect that the usual representation of the logical operator has in the codespace. This is essentially defining a new stabilizer code where some generators are replaced with their negation. With this trick, all the stabilizer measurements can be assumed to be "correct" and the exponential overhead is removed.

This again avoids having to coherently measure or rotate around the large E operator. Coherently measuring these stabilizers will require entangling circuits and ancillas but it may be possible to choose a generator $\mathcal{S} \setminus S_1$ whose elements have local support which would allow for parallelisation in this step. A similar principle applies to smaller symmetry sectors within the stabilizer subspace if they can be projected into by Pauli measurement. If this symmetry is defined by logical operators on the codespace then they can be made to commute with E in the same manner as the generators in $\mathcal{S} \setminus S_1$ and so their measurement can be included in the previously described procedure.

While the above preparation methods sound costly, the large-scale controlled dynamics required are independent of the circuit depth of the target unitary. This is advantageous in scenarios such as using phase kickback to obtain time-series phase information from a time evolution unitary.

Measuring the Phase

The other potential cost of APK is the measurements required to access the phase information, this will depend on whether the application requires coherent measurement. In cases like Statistical Phase Estimation only measurement statistics are required so the operators E and *SE* can be measured destructively, if they are Pauli operators this only requires single qubit Pauli measurements, with the products of their outcomes contributing to the measured expectations. Compared with standard phase kickback, accessing the phase information from APK in this way has no additional circuit cost associated with it, only additional measurements. Other applications of APK may require the phase to be measured coherently, such as Iterative Phase Estimation. Here APK incurs some additional cost, at each stage of IPE using APK the E operator will need to be measured coherently. As discussed earlier this will incur a circuit cost scaling with the support of E which is likely to be spread across the system of interest.

<u>Experimental implementation</u>

In this section we compare APK with standard phase kickback (SPK) by using each to perform statistical phase estimation on the 1D transverse-field Ising model (TFIM) with five sites shown below

$$H = -(X_1X_2 + X_2X_3 + X_3X_4 + X_4X_5) - U(Z_1 + Z_2 + Z_3 + Z_4 + Z_5). \quad (20)$$

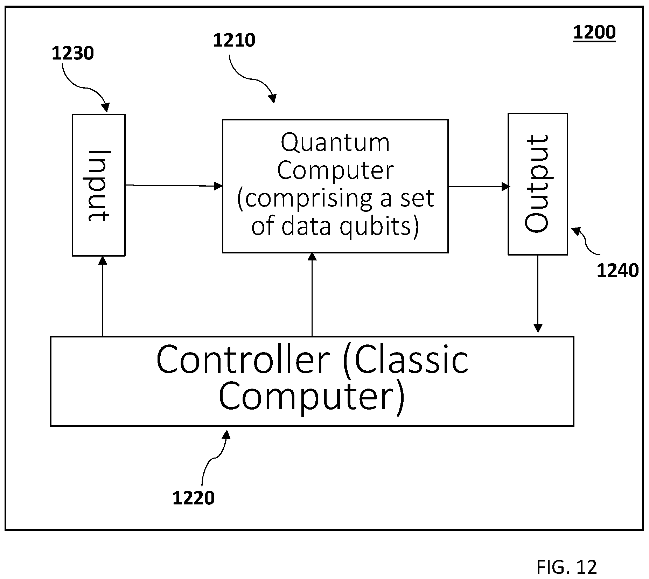

These experiments were performed on the 7-qubit IBM device ibm_nairobi. ibm_nairobi is an example of a quantum computer, such as the quantum computer described as a component in the quantum computer system 1200 with reference to Figure 12. Although a 7-qubit device is described herein, it is, of course understood that the methods and systems described can be applied to any sized quantum computer. Indeed, as indicated above, methods can be selected to best suit the limitations of the quantum computer to which they are applied.

We note that the Hamiltonian H permits operators E = $X_1Y_2X_3Y_4X_5$ and S = $Z_1Z_2Z_3Z_4Z_5$ that satisfy the commutation relations described in the section titled "Algebraic Phase Kickback for Time Dynamics" which will enable us to use APK. Our goal is to perform phase estimation of a randomly chosen stabilizer state $|\psi\rangle$ (where S $|\psi\rangle = |\psi\rangle$ with respect to the (reverse) time evolution operator $e^{iHt}$ and compare the performance of the two different methods of phase estimation. In particular, we estimate the quantity Tr($e^{iHt}\rho_S$) using each method, where $\rho_S$ is maximally mixed over the stabilizer states, i.e., computational basis states with even parity. We observe that for the Hamiltonian with coupling constant U = 2, the spectral analysis of $\rho_S$ comprises eigenvalues that can be grouped into three clusters, as shown, for example, in Figure 7. Hence, in this demonstration, we fix the coupling constant to this value with the aim to resolve these features.

Figure 7 shows the energy spectrum of $\rho_S$, the state that is maximally mixed over the computational basis states stabilized by S = $Z_1Z_2Z_3Z_4Z_5$, for the 5-qubit 1D Transverse Field Ising model with coupling coefficient U = 2. The ground state energy (leftmost peak) occurs at an x coordinate of approximately (eigenvalue)/$2\pi$ = -1.6, giving the eigenvalue as $e_g$ = -10.504 with a probability value of approximately 0.018.

<u>Qubit layout on IBMQ device</u>

Figures 8A and 8B pertain to connectivity graphs of the 7-qubit device ibm_nairobi. Figure 8A shows the 5 qubits in equation 20 mapped onto the device qubits [0,1,3,5,6] for the APL protocol. Figure 8b shows them mapped to device qubits [0,1,4,5,6] with qubit 3 being the control qubit or APK protocol. The APK protocol involves the application of the direct time evolution operation on the 5-qubits and requires no additional control qubit. Thus, in this case, 5 qubits in the system are chosen to be arranged on a single line on the device as shown in Figure 8A. On the other hand, the SPK protocol requires an ancilla qubit that is used to implement controlled-time evolution of the system. So, to implement SPE the 5 qubits of the TFIM are placed on two lines (shown in Figure 8B). Additionally, the two lines of qubits are chosen so that there is an ancilla (control) qubit on the bridge between these two lines. We map our 5 data qubits onto the qubits [0, 1, 4, 5, 6] of the device with qubit 3 being the control qubit.

<u>Preparation of the start state</u>

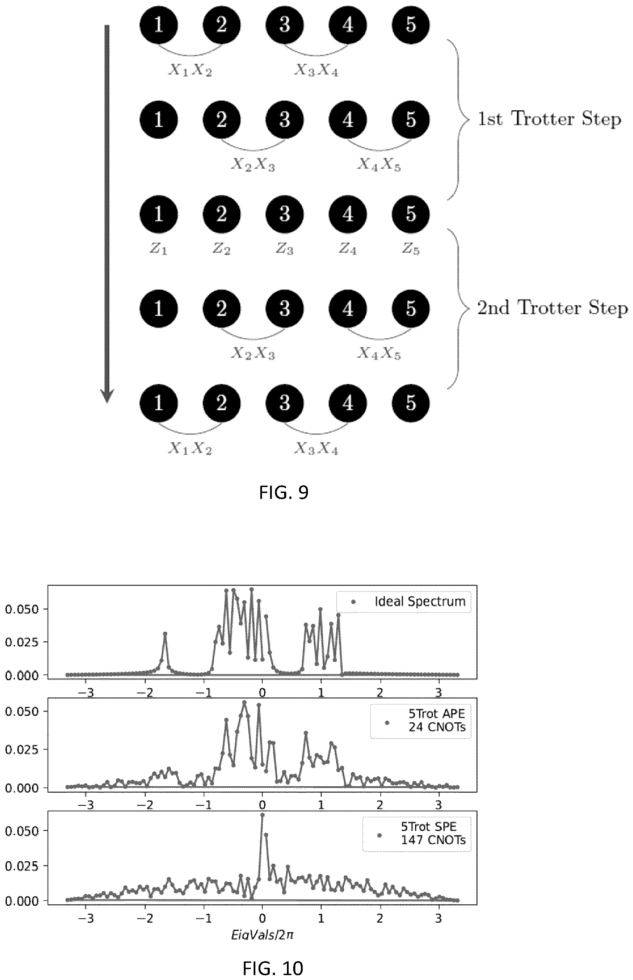

Figure 9 shows a schedule to implement two trotter layers of the time-evolution operation in i.e. equation 22 with n=2. The second trotter layer implemented in reverse to reduce circuit depth as in the case of SPK the controlled time evolution operator requires SWAPs to bring qubits in contact with the control ancilla. The numbers in Figure 9 refer to the canonical qubit numbering in equation 20. Recall from the above description of resource state preparation that APK applied to a general state $\rho$ requires a resource state of the form:

$$\sigma = \frac{1}{2}\left(1 + e^{i\theta}E\right)\rho\left(1 + e^{-i\theta}E\right) \qquad (21)$$

We set $\theta = \pi/2$ so our resource state is:

$$\sigma_S = \frac{1}{2}(1 + iE)\rho_S(1 - iE). \qquad (22)$$

Using the fact that $\rho_S \propto (1 + S)$ and with similar analysis to that in equation 17, we have that this resource state is:

$$\sigma_S = \frac{(1 + iES)}{2^5} \quad (23)$$

which is simply a uniform probabilistic mix of +1 eigenstates of $iES = Y_1X_2Y_3X_4Y_5$. This choice of resource state vs. say, $\theta = 0$ is an artefact of early discussions, the results are unaffected as discussed in the section titled 'resource state preparation'. Similarly to the $\theta = 0$ case discussed in the above description of resource state preparation , this means that $\sigma_S$ can be obtained by randomly sampling from product states stabilised by this Pauli, requiring only single qubit gates.

To estimate $\mathrm{Tr}(e^{iHt}\rho_S)$ using SPK, we sample from the computational basis states having even parity (+1 eigenstate of $S = Z_1Z_2Z_3Z_4Z_5$).

Phase estimation Via Trotterized dynamics

For both protocols we approximate the time-evolution operator for time t via first order Trotter-Suzuki formula, shown explicitly below:

$$(e^{iH\Delta t})^n \quad = (e^{iZ_4\Delta t}e^{iZ_5\Delta t}e^{iZ_1\Delta t}e^{iZ_3\Delta t}e^{iZ_2\Delta t}e^{iX_2X_3\Delta t}e^{iX_1X_5\Delta t}e^{iX_3X_4\Delta t}e^{iX_1X_2\Delta t})^n \quad ,(24)$$

where $\Delta t = t/n$ and $n$ is the number of Trotter layers which determines the approximation error. In the protocol using standard phase-kickback this operation is controlled on a single ancilla. To reduce circuit depth due to SWAP networks in the SPK procedure we implement each trotter layer in alternating order, meaning that the product formula is essentially second order for double the time step in cases where $n$ is even. See Figure 9 for details.

A single trotter layer of the uncontrolled time evolution operator (equation 24) used with APK can be implemented with a circuit comprising 8 CNOT gates and having total gate depth= 17 (2q gate depth = 6). On the other hand, a single trotter layer of the controlled time-evolution operator in the SPK protocol requires a circuit consisting of 35 CNOT gates and having total gate depth= 56 (2q gate depth = 30). The higher circuit depth of the SPE implementation can be attributed to the SWAPS required to bring qubits close to the control ancilla.

In the (SPK) APK based procedure the (controlled) time evolution is followed by measurement *of (X + iY* on the ancilla) $E + SE$, the expectation of which will yield an approximation of $(\langle e^{iHt}\rangle)\langle e^{iH2t}\rangle$ up to a factor of i.

In our demonstration, we apply the APK and SPK based protocols for phase estimation to estimate the time series $\mathrm{Tr}(e^{iHt}\rho_S)$ at discrete time intervals of $\Delta t = 0.5\pi/\|H\|$. This sampling rate is chosen as per the Nyquist-Shannon sampling theorem in order to capture the entire spectrum of the state in the Fourier transform of the discrete time series signal. We choose a maximum time of evolution $t_{max} = 8.1$ for the system. For each time instance, we also perform the protocol with different numbers of trotter layers $n = 1,2,3,5,7$.

Spectral analysis of experimental time-series data

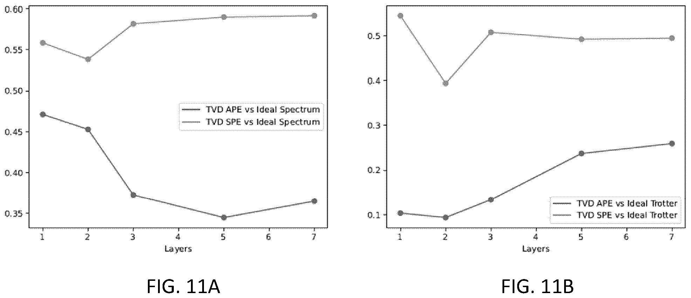

Fourier analysis of time series of $\rho_S$ obtained from the APE and SPE experiments. In Figure 10, the Fourier transforms of the time series data corresponding to the ideal values of $\mathrm{Tr}(e^{iHt}\rho_S)$ and those obtained from the hardware implementations of the APK and SPK based protocols with 5 trotter layers are shown. The ideal data is obtained from calculating $\mathrm{Tr}(e^{iHt}\rho_S)$ exactly for discrete times t at intervals of $\Delta t$ upto $t_{max} = 8.1$. The Fourier transform of this data gives the ideal spectrum in Figure 10 (the plot labelled ideal spectrum). Note that the spectrum in Figure 7 is obtained in the same manner but using $t_{max} = 150.1$ instead. While the ideal spectrum in Figure 7 resolves fewer eigenvalues than that in Figure 7, the former clusters the eigenvalues clearly into 3 groups with the ground state energy being clearly separated from the rest. We find that the signal obtained from the APK protocol has a peak at the ground state whereas the signal from the SPK protocol is featureless in comparison. This is clearly accounted for by the five-fold reduction in number of 2q (CNOT) gates in APE as compared to SPE. Figures 11A and B show plots of the total variation distance (TVD) of the spectra obtained from the SPK and APK protocols with respect to ideal unitary time dynamics as a function of number of trotter layers (11A) and from a spectrum produced by a noiseless trotter circuit as a function of Trotter layers (11B). Unsurprisingly the distance of the spectrum produced by ape to the ideal spectrum improves as the number of trotter layers increases. The plot of the total variation distance (TVD) of the spectra obtained from the SPK and APK protocols with respect to the ideal spectrum (11A) indicates that for APK, although the TVD decreases with increasing number of Trotter layers $n$ due to reduction in the Trotter approximation error, this effect is curbed at around $n = 5$ by the increasing number of CNOT gates to be implemented on the (noisy) IBM device. The SPK protocol doesn't exhibit such a clear trend due to the much larger number of CNOT gates required even for a few Trotter layers.

Figure 12 illustrates an example schematic of a quantum computer system (or apparatus) 1200 for implementing the methods described herein. The quantum computer system 1200 comprises a controller 1220 for example a "classical" computer; an input 1230; a quantum computer 1210 comprising a set of data qubits such as the set of data qubits described above; and an output 1240. The controller 1220 can be used to control the input 1230 for inputting parameters into the quantum computer 1210, for example the input 1230 may be control signals (calculated by the controller, in accordance with the methods discussed above) to encode specific quantum states on qubits of the quantum computer 1210, and/or to implement controlled manipulations of the quantum states of the qubits of the quantum computer 1210 (e.g. to perform gate operations on one or more of the qubits). The controller may further comprise a parallelism manager, a hardware-aware multi-programming compiler and a schedular in order to attend to the specific hardware requirements of the quantum computer 1210.

The quantum computer 1210 has a plurality of qubits for performing to obtain phase information corresponding to the quantum circuit, U by: preparing a resource state $|\psi\rangle_r = |\psi\rangle + e^{ix} E |\psi\rangle$; and applying $U_M$ to the resource state a predetermined number of times to provide an output state encoding eigenvalues $e^{i\phi_i}$ of the quantum circuit U. For example, the quantum computer may be the 7-qubit IBM device ibm_nairobi described in the experimental implementation above. In other cases the quantum computer could be a device with over a hundred qubits. Depending on the calculation to be performed, these may be used as data qubits or as ancilla qubits. The output 1240, outputs information measured from the qubits of the quantum computer 1210 and transmits the information to the controller 1220 where it can be displayed to a user. The output 1240 and input 1230 may be the same, for example a single channel may be used to send and receive signals to the quantum computer 1210.

Quantum computer system 1200 is one example of a quantum computer system that could be used to perform the methods described herein. The quantum computer 1210 may comprise photonic qubits; ion trap qubits or superconducting qubits. In some examples, the input states and resource states may be physical quantum states stored in quantum memory. Such input states may have been produced by any number of procedures. These procedures include for example: a simple state preparation protocol which produces a known quantum state which could be efficiently described classically; a more complicated quantum algorithm which produces an unknown quantum state that might not be efficiently described classically; taken from some quantum memory that has been initialized by some known or unknown source. Beneficially, the systems described herein allow determination of phase information of a matrix describing a quantum circuit be it with a classical simulation of a quantum circuit or using real quantum hardware.

In some examples, some or all of the method may be carried out on a simulation of a quantum computer, for example the IBM Qiskit simulator. In such examples, methods performed on a quantum computer may instead be performed on a classical computer simulating a quantum computer provided the classical computer has enough computational power (this rapidly becomes infeasible as the quantum computer scales up). In such examples, the reduced cost achieved by the performing the method on a quantum computer (reduced gate count or qubit number) will provide at least some benefit in the classical simulation. Other quantum computing qubits may also be used, the methods described herein are not restricted to any one particular quantum technology.

The present disclosure may further relate to the following aspects.

1. A computer-implemented method for determining phase information of a matrix representative of a quantum circuit, the method comprising:

> receiving a unitary matrix, $U_M$, representative of a quantum circuit, U, which acts on a target set of qubits and identifying generalised Pauli operators, E and S associated with the unitary matrix, $U_M$, the matrices satisfying a first set of conditions:

$$ES = -SE;$$

$$EU_M = U_M{}^{-1}E;$$

> and

$$SU_M = U_MS;$$

> defining an input state $|\psi\rangle$ to the quantum circuit, U represented by the unitary matrix $U_M$, wherein the input state $|\psi\rangle$ has support confined to the +1 or -1 eigenspace of S;
> obtaining phase information corresponding to the quantum circuit, U by:
> preparing a resource state $|\psi\rangle_r = |\psi\rangle + e^{ix} E |\psi\rangle$; and
> applying $U_M$ to the resource state a predetermined number of times to provide an output state encoding eigenvalues $e^{i\phi_i}$ of the quantum circuit U.

2. The method of clause 1 wherein the input state is in the +1 eigenspace of S.

3. The method of clause 1 wherein E and S are multi-qubit Pauli operators.

4. The method of any preceding clause wherein $|\psi\rangle = \Sigma_i \alpha_i |\phi_i\rangle$ is a superposition of eigenvectors $|\phi_i\rangle$ of $U_M$ with eigenvalues $e^{i\phi_i}$ and applying the target circuit to the resource state yields:

$$U_M |\psi\rangle_r = \sum_i \alpha_i (e^{i\phi_i}|\phi_i\rangle + e^{-i\phi_i} iE|\phi_i\rangle) = \sum_i e^{-i\phi_i}\alpha_i (e^{i2\phi_i}|\phi_i\rangle + iE|\phi_i\rangle)$$

5. The method of any preceding clause, wherein receiving unitary matrix $U_M$ includes:

receiving a unitary matrix $V_M$ representative of a quantum circuit V, wherein $V_M$ does not satisfy the first set of conditions; and
modifying $V_M$ to provide $U_M$ for which generalised Pauli operators, E and S do exist which satisfy the first set of conditions, wherein modifying $V_M$ includes:
introducing one or more ancillary qubits;
identifying unitary matrix $U_M$ acting jointly on the target and one or more ancillary qubits;
identifying a target input state $|\psi'\rangle$ such that:
$|\psi'\rangle = |\psi\rangle|a\rangle$ where $|a\rangle$ is a state encoded on the one or more ancillary qubits;

$$S |\psi'\rangle = |\psi'\rangle ;$$

and

$$U |\psi'\rangle = V|\psi\rangle|a\rangle .$$

6. The method of clause 5 wherein modifying $V_M$ to provide $U_M$ further comprises:

identifying a Hamiltonian, $H = \Sigma_j h_j$ by which $V_M$ is generatable such that $V = e^{\{iH\}} + \varepsilon$; and
introducing ancillary qubits and identify a set of operators $P_j$ such that:

each $P_j$ acts on the ancillary qubits;
$P_j P_k = P_k P_j$ for all (j,k); and
E and S satisfy the first set of conditions for H';

$$H' = \sum_j h_j' = h_j \otimes P_j;$$

$U_M$ is equal to $e^{iH'} + \varepsilon'$;
$|\psi'\rangle$ is equal to $|\psi\rangle \otimes |a\rangle$; and
$|a\rangle$ is a common +1 eigenstate of all $P_j$.

7. The method of clause 6, wherein $P_j$ are chosen to minimize the cost of executing the circuit $U_M$.

8. The method of clause 6, wherein the number of indices j for which $P_j = 1$ is maximized.

9. The method of clauses 6 to 8 further comprising identifying a first subset, $h_m$ of $h_j$ for which there exists a Pauli operator F such that for each $h_m$: $h_m F = -F h_m$, and identifying a second nonempty subset $h_n$ of $h_j$, wherein $h_m$ and $h_n$ are compliment subsets; the method further comprising:

introducing ancillary qubits and associating to each term $h_n$ in the second subset a corresponding Pauli operator $P_n$; and
identifying Pauli operators Q and S such that:

$P_n P_{n'} = P_{n'} P_n$ for all (n,n');
$QP_n = -P_n Q$ for all n;
$Qh_m = h_m Q$ for all $h_m$ in the first subset;
$S Q = - Q S$;
$h_n' = h_n \otimes P_n$; $E = F \otimes Q$;

$|\psi'\rangle$ is equal to $|\psi\rangle \otimes |a\rangle$; and

$|a\rangle$ is a common +1 eigenstate of all $P_n$ .

10. The method of clause 9 wherein for each $h_n$ in the second subset ,an ancillary qubit $q_n$ is introduced the method further comprising:

setting $P_n = Z_{qn}$ on the qubit $q_n$;

setting $S = Z_{qn}$ for a choice of $q_n$; and

setting $Q = \otimes_{qn} X_{qn}$.

11. The method of clause 9 wherein an ancillary qubit *a* is introduced and for each $h_n$ , $P_n = Z_a$ on qubit a, setting $S = Z_a$ and $Q = X_a$

12. The method of any preceding clause wherein obtaining phase information corresponding to the circuit U further comprises:

measuring $\langle E - SE \rangle = g_k$, wherein the predetermined number of times the circuit is applied is equal to a value k determined by a desired precision to which the phase information is to be extracted.

13. The method of clause 12, wherein the value k corresponds to a time parameter, wherein each execution of the circuit corresponds to a small timestep delta and wherein executing the circuit k times, corresponds to evolving for time k * the small timestep.

14. The method of clause 12 wherein obtaining phase information corresponding to the circuit U further comprises performing a classical Fourier transform, a matrix pencil method and/or further post processing on the signal $g_k$.

15. The method of clauses 1 to 11, wherein an initial value of n represents a position of the least significant bit to be read in the binary expansion of a phase to be read out and wherein the predetermined number of times the circuit is applied to the resource state is equal to $2^{n-1}$, the method further comprising:

(a) reading out the nth bit by measuring E;

(b) reducing the value of n by 1;

(c) rotating into an intermediate resource state by applying a unitary correction dependent on the most recent result of measuring E;

(d) applying $U_M$ $2^{n-1}$ times to the resource state;

(e) applying a unitary to provide an appropriate rotation to undo the bits which have already been read out; and

(f) reading out the nth bit by measuring E,

where steps (b) to (f) are repeated with a final iteration being when n is equal to a value of 2.

16. The method of clause 15, wherein step (c) comprises:

identifying the most recent measurement is E = +1 and applying no rotation; or

identifying the most recent measurement is E = -1 and applying an S rotation..

17. The method of any preceding clause, wherein the extracted phase information is used in calculating energy levels in a representation of a physical system.

18. The method of any one of clauses 1 to 16, wherein the extracted phase information is used in performing a Hadamard test to estimate the overlap between two states.

19. The method of any one of clauses 1 to 16, wherein the extracted phase information is used in trace estimation.

20. A computer apparatus for determining phase information of a matrix representative of a quantum circuit, the computer apparatus comprising:

a classical processor, configured to:

receive a unitary matrix, $U_M$, representative of a quantum circuit, U, which acts on a target set of qubits and identifying generalised Pauli operators, E and S associated with the unitary matrix, $U_M$, the matrices satisfying a first set of conditions:

$$ES = -SE;$$

$$EU_M = U_M{}^{-1}E;$$

and

$$SU_M = U_M S;$$

define an input state $|\psi\rangle$ to the quantum circuit U represented by the unitary matrix $U_M$, wherein the input state $|\psi\rangle$ has support confined to the +1 or -1 eigenspace of S;
perform operations to obtain phase information corresponding to the quantum circuit, U by:
preparing a resource state $|\psi\rangle_r = |\psi\rangle + e^{ix}$ E $|\psi\rangle$; and
applying $U_M$ to the resource state a predetermined number of times to provide an output state encoding eigenvalues $e^{i\phi_i}$ of the quantum circuit U.

21. The computer apparatus of clause 20, wherein the classical processor performing operations to obtain phase information includes simulating the steps of preparing a resource state and applying $U_M$ the predetermined number of times on classical hardware.

22. The computer apparatus of clause 20, further comprising a quantum information processor, the classical processor and the quantum information processor being communicatively coupled with one another, and wherein the classical processor performing operations to obtain phase information includes:
the classical processor providing control signals to the quantum information processor to cause the quantum information processor to enact the steps of preparing a resource state and applying $U_M$ the predetermined number of times.

23. The apparatus of clause 22, wherein the classical processor is further configured to receive information from the quantum information processor once the quantum information processor has enacted the steps of preparing a resource state and applying $U_M$ the predetermined number of times, to read out the encoded eigenvalues.

24. The apparatus of any one of clauses 20 to 23, further configured to enact the method of any one of clauses 1 to 19.

25. A non-transient computer readable medium comprising instructions which cause a computer apparatus to enact the method steps of any one of Clauses 1-19.

**Further information and mathematical proofs**

The methods and apparatus have been described where possible in general terms abstracted from example mathematical formula and algorithms that could be used to implement such methods. This section provides a mathematical description and example mathematical methods that could be used to implement specific examples of the methods described above.

**A Necessary and Sufficient Conditions for APK to be Possible**

**Theorem 1** (restated) Let *U* and E be unitary with E Hermitian and *U* preserving a subspace W. There exists Hermitian unitary S such that *U, E* and S have the structure in Equation 8 the subspace W $\oplus$ EW if and only if the following (equations (25) and (26)) hold:

$$\Pi_W E \Pi_W = 0, \qquad\qquad (25)$$

$$\Pi_W E U E \Pi_W = \Pi_W U^+ \Pi_W, \qquad\qquad (26)$$

where $\Pi_W$ is the projector into W.
*Proof.* The only if direction is clear from the structure in equation 8 so we will prove the if direction.

Condition 27 the fact that E is self-inverse mean that E maps W to EW and back again and so in some basis it has the form:

$$
E = \begin{array}{c} \\ \mathbf{W} \\ E\mathbf{W} \end{array}
\begin{array}{c} \mathbf{W} \quad E\mathbf{W} \end{array}
\begin{pmatrix} 0 & 1 & 0 \\ 1 & 0 & 0 \\ 0 & 0 & \cdot \end{pmatrix}.
$$

(27)

As U preserves the space W it has the form:

$$
U = \begin{array}{c} \\ \mathbf{W} \\ E\mathbf{W} \end{array}
\begin{array}{c} \mathbf{W} \quad E\mathbf{W} \end{array}
\begin{pmatrix} V & 0 & 0 \\ 0 & A & \cdot \\ 0 & \cdot & \cdot \end{pmatrix},
$$

(28)

with $V$ unitary. Conjugation by $E$ will swap $V$ and $A$ so by condition 28 $A = V^{\dagger}$. One can then define:

$$
S = \begin{array}{c} \\ \mathbf{W} \\ E\mathbf{W} \end{array}
\begin{array}{c} \mathbf{W} \quad E\mathbf{W} \end{array}
\begin{pmatrix} 1 & 0 & 0 \\ 0 & -1 & 0 \\ 0 & 0 & \cdot \end{pmatrix},
$$

(29)

where the bottom diagonal block can be any Hermitian unitary.

**B Conditions Under Which APK Can be Applied to a Hamiltonian**

Identifying the conditions on $P_i$ such that Paulis $E$ and $S$ exist satisfying Equation 13 exist may be formulated as a binary matrix problem. We represent the set $P_i$ as a binary matrix H whose rows are the binary symplectic form of the Paulis $P_i$. We also represent $E$ and $S$ as column vectors $\mathbf{e}$ and $\mathbf{s}$ in binary symplectic form. The problem may then be restated as when do there exist $\mathbf{e}$ and $\mathbf{s}$ such that:

$$
\mathbf{H} \wedge \mathbf{s} = \mathbf{0}, \quad \mathbf{H} \wedge \mathbf{e} = \mathbf{1}, \quad \mathbf{s}^T \mathbf{e} = 0,
$$

(30)

where $\mathbf{0}$ and $\mathbf{1}$ are the all-zeros and all-ones vectors respectively and $\wedge$ is the symplectic form:

$$
\wedge = \begin{pmatrix} 0 & 1 \\ 1 & 0 \end{pmatrix}.
$$

(31)

**Definition 4** (Even row space) For binary matrix **A:**

$R_0 (A) := \{v \mid \exists u \; s. \; t. \; u^T A = v^T \text{ and } |u| = 0\}$,
*i.e. the space formed by even sums of row vectors of **A.***

**Definition 5** (Odd Cokernel)

$\mathrm{coker}_1(A) := \{v \mid v^T A = 0^T \text{ and } |v| = 1\}$,
*i.e. the elements of coker(A) with odd Hamming weight.*

**Lemma 6.** Given a binary matrix **A,** there exists e such that $\mathbf{A} \wedge \mathbf{e} = \mathbf{1}$ *if and only if* $\mathrm{coker}_1 (A) = 0$.

*Proof.* Suppose $\mathbf{A} \wedge \mathbf{e} = \mathbf{1}$ and that there exists nonzero $u \; \varepsilon \; \mathrm{coker}_1(A)$ Then we have:
$u^T A \, A \, e = 0 = u^T 1 = |u| = \mathbf{1,}$
a contradiction.

Suppose now that $\mathrm{coker}_1(A) = 0$ then no row of **A** may be expressed as a sum of an even number of its own rows, i.e. no row of **A** is in $R_0(\mathbf{A})$. Consider the submatrix **B** of **A** consisting only of rank(A) linearly independent rows. The cokernel of **B** is then empty and so **B** is surjective, thus there exists **v** such that **Bv** = **1**. It also follows that for every row $r_i$ in **A**, $\mathbf{r}_i\mathbf{v}$ = 1 since $\mathbf{r}_i$ is either a row of **B** or an odd sum of its rows, therefore **Av** = **1**. Finally, as the symplectic form is self-inverse we may set $\mathbf{e} = \wedge \mathbf{v}$ and we have AAe = 1.

**Theorem** 7. *Given a binary matrix A, there exists* **e, s** *such that* $A\wedge$ s = 0, $A\wedge$ **e** = **1** *and* $s^T$ e = 1 *if and only if* $\text{coker}_1$ (A) = **0** and ker(A$\wedge$) $\not\subseteq$ R0(A).

*Proof.* The above lemma has shown that $\mathbf{A} \wedge \mathbf{e} = \mathbf{1}$ <==> $\text{coker}_1(A) = \mathbf{0}$, also ker(A$\wedge$) $\not\subseteq$ R0(A) implies a nonempty kernel of **A** and is then equivalent to the existence of **s** with $\mathbf{A} \wedge \mathbf{s} = \mathbf{0}$. It then remains to prove the existence of **e, s** such that $s^T$ e = 1 if and only if ker(A) $\not\subseteq$ R0(A). For the if direction choose any s and **e** s.t. $\mathbf{A} \wedge \mathbf{s} = 0$, $\mathbf{A} \wedge \mathbf{e} = \mathbf{1}$. Let:

$$\mathbf{B} := \begin{pmatrix} A \\ S^T \end{pmatrix} \tag{32}$$

and suppose ker(A$\wedge$) $\subseteq R_0(A)$. Then there exists x s.t. $x^TA = s^T$ and $|x| := x^T 1 = 0$. Then $(x^T, 1)B = x^TA + s^T = 0$ and $|(x^T, 1)| =$ 1. Therefore $\text{coker}_1(\mathbf{B}) \neq 0$ and by the earlier lemma there does not exist **y** such that **By** = **1.** However

$\mathbf{B} \wedge \mathbf{e} = \begin{pmatrix} \mathbf{A} \wedge \mathbf{e} \\ \mathbf{s}^T \wedge \mathbf{e} \end{pmatrix} = \mathbf{1}$ so this is a contradiction. Therefore ker(A $\wedge$) $\not\subseteq R_0(A)$.

For the only if direction choose s $\in$ ker(A$\wedge$) s.t. s$\notin$R0(A). Again define B as in equation 32. There exists **e** s.t. $\mathbf{B} \wedge \mathbf{e}$ = **1** if coker1(**B**) = **0**. Suppose this were not true and choose $\mathbf{x} \in$ coker1(**B**). Break up the support of **x** into **x** = (xA, xs) such that x$TB$ = xTA A + xssT = 07. If **xs** = 0 then xA $\in$ **coker(A)** and |xA| = 1, which is a contradiction since coker1(A) = 0. If **xs** = 1 then xTA A = $s^T$. However since **s** $\in R0(A)$ it follows that |xA| = 1 and |x| = 0 which is also a contradiction since x $\in$ coker1**(B).** Therefore coker1(B) = **0** and there exists **e** s.t. $\mathbf{B} \wedge \mathbf{e}$ = 1. It follows that $\mathbf{A} \wedge \mathbf{e} = \mathbf{1}$ and $s^T \wedge \mathbf{e}$ = 1.

The above conditions can be efficiently checked. One can check that coker1(A) = 0 by finding a basis of coker(A) which may be done efficiently via gaussian elimination of the block matrix (**A**1). If this basis contains no odd weight terms then the condition holds. To check if ker(A$\wedge$) $\not\subseteq R0(A)$ it suffices to show that the intersection between the two sets is equal to ker(A$\wedge$), this intersection may be found from spanning sets of each set via the Zassenhaus algorithm. A spanning set of ker(A$\wedge$) may be found via gaussian elimination similarly to above and a spanning set of R0(A) is found in every pairwise sum of the rows of A.

## C Some Additional Discussion About IPE vs SPE

In the case where $U$ approximates a short time step $\delta$ of some Hamiltonian dynamics H then $U^n \approx e^{itH}$, where $t = \delta n$. We may think of $g(n)$ as a parametrized time signal $g(t) = g(\delta n)$, with $G(\omega)$ being the corresponding Fourier transform. For a Hamiltonian with spectral norm $|H|$ a sampling rate of at least $1/2(2\pi|H|)$ is required to avoid aliasing, which if not avoided would lead to wrap-around of the spectral distribution $G(\omega)$. Furthermore, any signal $g(t)$ can only be produced up to a certain max time $T$ which can be modelled as multiplying the signal by a top-hat function:

$$g_T(t) := \Pi_T(t)g(t) \; , \; \Pi_T(t) := \begin{cases} 0 & : \; |t| > T \\ 1 & : \; |t| \leq T \end{cases}$$

which corresponds to a convolution of the spectral distribution with a sinc function:

$$G_T(\omega) := \mathcal{F}[g] = T\text{sinc}(T\omega) * G(\omega).$$

So that for short times T spectral lines are spread out and may not be well resolved.

IPE has two advantages over SPE. First, in the case of superpositions or mixed input states, the protocol not only reads out the first p bits of the phase, but also prepares a state in the subspace spanned by eigenvectors whose eigenvalues share those bits so that for a sufficient resolution IPE effectively prepares the corresponding eigenstate. Secondly, the compressed quantum Fourier transform is effectively performing a fast Fourier transform on a classical signal $g$ of exponential size, and thus can resolve eigenvalues at exponentially greater precision than SPE - provided $U^{2n}$ can be executed efficiently with $n$. However in the case of time dynamics of Hamiltonians we should expect that in general it will not be possible to execute operations like $U^{2n}$ efficiently with n, but rather logarithmically, so that the resolution scaling is similar to SPE. Furthermore by the arguments outlined above we will only require a sampling rate that scales like poly(1/|$H$|), so that only a polynomial number of samples of the classical signal $g$ are required. Thus it seems likely that SPE is a sufficient substitute to IPE for applications involving resolving spectral information about a Hamiltonian H described by a polynomial number of Pauli terms.

## D APK For Time Dynamics: Further Reading

### D.1 Example Hamiltonian Constructions

### D.2 Error Propagation And APK Compatible Simulation Circuits

It is often the case in time dynamics simulation that instead of the true unitary of interest U one only has access to an approximation:

$$\widetilde{U} = U + \delta U, \quad \| \delta U \|_\infty = \epsilon. \tag{33}$$

It is worth checking how this error propagates through to the measurements used to access the phase kickback. Consider performing APK with $\widetilde{U}$ on input state $\rho$ from the subspace V and measuring E. Denote the initial resource state:

$$\sigma := \tfrac{1}{2}(1 + E)\rho(1 + E), \tag{34}$$

note that this is also a density matrix. The norm of the error on the expectation of this measurement vs. using the true U will be:

$$\begin{aligned}\left|\text{Tr}[EU\sigma U^\dagger] - \text{Tr}[E\widetilde{U}\sigma\widetilde{U}^\dagger]\right| =& \ \left|\text{Tr}[E\delta U\sigma U] + \text{Tr}[EU\sigma\delta U] + \text{Tr}[E\delta U\sigma\delta U]\right| \\ =& \ 2\epsilon + \epsilon^2,\end{aligned} \tag{35}$$

where in the second line we use the triangle inequality and the below case of Hölder's inequality for matrices

$$\left|\text{Tr}[A^*B]\right| \leq \| A \|_\infty \| B \|_1, \tag{36}$$

together with the fact that $\| \sigma \|_1 = \| E \|_\infty = \| U \|_\infty = 1$. The error on the expectation of $SE$ has the same bound by the same argument. In the context of SPE, this would result in an error on the value of $\langle U^2 \rangle$ of

$$\delta\langle U^2 \rangle = \sqrt{2}(2\epsilon + \epsilon^2) \tag{37}$$

as the expectations of E and $SE$ are the real and imaginary parts of $(U)$ respectively. In the context of IPE, the probability of an incorrect measurement outcome at each stage can be increased by up to $\varepsilon + \frac{\epsilon^2}{2}$ by this approximation error (as well as cascading effects from erroneous phase corrections from previous incorrect measurements).

For some methods, the approximant itself may also be compatible with the APK set up for the target unitary, in the sense that:

$$E\widetilde{U}E = \widetilde{U}^\dagger, \quad [\widetilde{U}, S] = 0. \tag{38}$$

Examples include symmetric product formulas such as Trotter-Suzuki formulas [CITE] of order > 2. In this case we will have that:

$$\langle E \rangle = 2Re(\langle\widetilde{U}^2\rangle), \tag{39}$$

and the error on this value will then also be bounded by $2\varepsilon + \varepsilon^2$ as above, however when taking the sum with the expectation of $SE$, the APK compatibility will ensure that:

$$\langle E + SE \rangle = \langle\widetilde{U}^2\rangle \tag{40}$$

so the error on $\langle U^2 \rangle$ will be bounded as:

$$\delta\langle U \rangle = \left|\langle U^2 \rangle - \langle\widetilde{U}^2\rangle\right| \leq 2\epsilon + \epsilon^2 \tag{41}$$

a factor of $\sqrt{2}$ improvement.

**E Application To Quantum Signal Processing**

Given access to the operators required to perform the APE procedure, one may also implement a version of quantum signal processing (QSP) on the eigenphases of the unitary operation. We begin with a brief review of QSP and then discuss how the structures used in APE lend themselves to the method.

In its basic form, quantum signal processing is a method for producing a parametrised family of single qubit operators through a series of Pauli rotations. Its building blocks are the *signal operator,* a Pauli rotation of fixed angle and a series of *signal processing* operators, rotations around a different Pauli through varying angles. An interleaved product of these operators can realise an expressive and finely tuneable set of parametrised unitaries.

There are numerous equivalent pictures for QSP, the one most relevant to us is the so-called Z picture. In this construction the signal operator is a Z rotation, written as

$$W_z(\omega) := \begin{pmatrix} \omega & 0 \\ 0 & \omega^{-1} \end{pmatrix} \tag{42}$$

where $\omega = e^{i\theta}$ and the signal operators are *X* rotations.

Theorem 8 (QSP in the Z picture). *For all $d \in \mathbb{N}$ there exists a sequence of phase angles $\phi_0, ..., \phi_d = : \vec{\phi} \in \mathbb{R}^{d+1}$ such that:*

$$W_{\vec{\phi}} := e^{iX\phi_0} \prod_{k=1}^{d} W_z(\omega) e^{iX\phi_k} = \begin{pmatrix} F(\omega) & iG(\omega) \\ iG(\omega^{-1}) & F(\omega^{-1}) \end{pmatrix} \tag{43}$$

*for real Laurent polynomials $F, G \in \mathbb{R}[\omega, \omega^{-1}]$ if and only if the following hold:*

1.

$$deg(F), deg(G) \leq d,$$

*2. F, G have parity d mod 2,*
3.

$$|F(\omega)|^2 + |G(\omega)|^2 = 1 \quad \forall |\omega| = 1.$$

More recently, these results were extended to allow the implementation of a more flexible family of unitaries from a signal operator by using a wider set of interstitial rotations .

Theorem 9 (Generalised QSP in the Z convention) Define:

$$R(\vartheta, \phi, \lambda) := \begin{pmatrix} e^{i(\lambda+\phi)}\cos\vartheta & e^{i\phi}\sin\vartheta \\ e^{i\lambda}\sin\vartheta & -\cos\vartheta \end{pmatrix}. \tag{44}$$

For all $d \in \mathbb{N}$ there exists $\vec{\vartheta}, \vec{\phi} \in \mathbb{R}^{d+1}, \lambda \in \mathbb{R}$ such that:

$$W_{\vec{\vartheta}, \vec{\phi}} = \left( \prod_{k=1}^{d} R(\vartheta_k, \phi_k, 0) W_z(\omega) \right) R(\vartheta_0, \phi_0, \lambda) = \begin{pmatrix} F(\omega) & -G(\omega)^* \\ G(\omega) & F(\omega)^* \end{pmatrix} \tag{45}$$

*if and only if 1. $F, G \in \mathbb{C}[\omega, \omega^{-1}]$ and deg(F), deg(G) $\leq$ d, 2. F, G have parity d mod 2, 3.*

$$|F(\omega)|^2 + |G(\omega)|^2 = 1 \quad \forall |\omega| = 1.$$

The key difference being that F and G may now have complex coefficients.

The above results show that using repeated calls to $W_z(\omega)$ with rotations in between it is possible to produce a unitary whose elements are fourier series in $e^{\pm i\theta}$ subject to some constraints. Most notable is the fact that for any such fourier series up to $d\theta$ one only needs d calls to the signal operator. Furthermore, the parity constraint can be avoided by setting $\omega = e^{i\theta/2}$ and using d calls to $W_z$ to produce arbitrary parity fourier series of $e^{i\theta}$ up to $d\theta/2$, subject to the unitarity condition on the norms of F and G.

Methods like this have wide applications from NMR spectroscopy to atomic clocks but in their seminal results on Hamiltonian simulation, Low et al. had the insight that if one has access to an operator of the form:

$$W_z = \oplus \begin{pmatrix} \omega & 0 \\ 0 & \omega^{-1} \end{pmatrix}_\omega \quad (46)$$

and the proper rotations, one can perform QSP in superposition across these spaces. A straightforward way to obtain an operator like this would be to bidirectionally control a unitary U on an ancilla qubit, using this as the signal operator and rotations on the ancilla as the signal processing operators one can get a transformed operator of the form:

$$W_{\vec{\vartheta},\vec{\phi}} = \begin{pmatrix} F(U) & -G(U)^\dagger \\ G(U) & F(U)^\dagger \end{pmatrix}. \quad (47)$$

Preparing the ancilla in a given state and measuring it in some basis after applying the above QSP operator will result in some combination of $F(U)$ and $G(U)$ being applied to the rest of the system. For example, preparing it in $|0\rangle$ and measuring $|0\rangle$ will yield:

$$\langle 0| W_{\vec{\vartheta},\vec{\phi}} |0\rangle |\psi\rangle = |0\rangle F(U)|\psi\rangle \quad (50)$$

Or measuring $|+\rangle$ leads to:

$$\langle +| W_{\vec{\vartheta},\vec{\phi}} |0\rangle |\psi\rangle = \frac{1}{\sqrt{2}} |+\rangle (F(U) + G(U))|\psi\rangle \quad (50)$$

The success probability of such a measurement depends on the norm of the resulting unnormalized state.

As a unitary compatible with algebraic phase kickback has the same structure as a bidirectional controlled unitary, the same effect can be achieved by using the unitary as the signal operator and the relevant $E$ and $S$ operators defining signal processing rotations and measurements, analogous to $X$ and $Z$ on the ancilla respectively. Implementing QSP on an APK compatible unitary this way requires no additional controls for the signal operator, instead, the signal processing rotations about $E$ and $S$ will have an increased control cost. In this case the control cost will scale only with the number of signal processing "layers", i.e. the value of d whereas in the straightforward single-ancilla implementation the control cost will scale multiplicatively with d and the circuit depth of the uncontrolled signal operator.

**Claims**

1. A computer-implemented method for determining phase information of a matrix representative of a quantum circuit, the method comprising:

    receiving a unitary matrix, $U_M$, representative of a quantum circuit, U, which acts on a target set of qubits and identifying generalised Pauli operators, E and S associated with the unitary matrix, $U_M$, the matrices satisfying a first set of conditions:

    $$ES = -SE;$$

    $$EU_M = U_M^{-1}E;$$

    and

    $$SU_M = U_M S;$$

    defining an input state $|\psi\rangle$ to the quantum circuit, U represented by the unitary matrix $U_M$, wherein the input state $|\psi\rangle$ has support confined to the +1 or -1 eigenspace of S;
    obtaining phase information corresponding to the quantum circuit, U by:

preparing a resource state $|\psi\rangle_r = |\psi\rangle + e^{ix} \in |\psi\rangle$; and
applying $U_M$ to the resource state a predetermined number of times to provide an output state encoding eigenvalues $e^{i\Phi_i}$ of the quantum circuit U.

2. The method of claim 1 wherein the input state is in the +1 eigenspace of S and/or wherein E and S are multi-qubit Pauli operators.

3. The method of any preceding claim, wherein receiving unitary matrix $U_M$ includes:

   receiving a unitary matrix $V_M$ representative of a quantum circuit V, wherein $V_M$ does not satisfy the first set of conditions; and
   modifying $V_M$ to provide $U_M$ for which generalised Pauli operators, E and S do exist which satisfy the first set of conditions, wherein modifying $V_M$ includes:

      introducing one or more ancillary qubits;
      identifying unitary matrix $U_M$ acting jointly on the target and one or more ancillary qubits;
      identifying a target input state $|\psi'\rangle$ such that:
      $|\psi'\rangle = |\psi\rangle|a\rangle$ where $|a\rangle$ is a state encoded on the one or more ancillary qubits;

$$S\,|\psi'\rangle = |\psi'\rangle;$$

      and

$$U\,|\psi'\rangle = V|\psi\rangle|a\rangle.$$

4. The method of claim 3 wherein modifying $V_M$ to provide $U_M$ further comprises:

   identifying a Hamiltonian, $H = \Sigma_j\, h_j$ by which $V_M$ is generatable such that $V = e^{\{iH\}} + \varepsilon$; and
   introducing ancillary qubits and identify a set of operators $P_j$ such that:

      each $P_j$ acts on the ancillary qubits;
      $P_jP_k = P_kP_j$ for all (j,k); and
      E and S satisfy the first set of conditions for H';

$$H' = \sum_j h_j' = h_j \otimes P_j;$$

      $U_M$ is equal to $e^{iH'} + \varepsilon'$;
      $|\psi'\rangle$ is equal to $|\psi\rangle \otimes |a\rangle$; and
      $|a\rangle$ is a common +1 eigenstate of all $P_j$

5. The method of claim 4, wherein $P_j$ are chosen to minimize the cost of executing the circuit $U_M$ or wherein the number of indices j for which $P_j = 1$ is maximized.

6. The method of claim 4 or claim 5 further comprising identifying a first subset, $h_m$ of $h_j$ for which there exists a Pauli operator F such that for each $h_m$: $h_mF = -Fh_m$, and identifying a second nonempty subset $h_n$ of $h_j$, wherein $h_m$ and $h_n$ are compliment subsets; the method further comprising:

   introducing ancillary qubits and associating to each term $h_n$ in the second subset a corresponding Pauli operator $P_{n'}$;and
   identifying Pauli operators Q and S such that:

      $P_nP_{n'} = P_{n'}P_n$ for all (n,n');
      $QP_n = -P_n Q$ for all n;
      $Qh_m = h_mQ$ for all $h_m$ in the first subset;
      $S\,Q = -\,Q\,S$;
      $h'_n = h_n \otimes P_n$; $E = F \otimes Q$;

$|\psi'\rangle$ is equal to $|\psi\rangle \otimes |a\rangle$; and

$|a\rangle$ is a common +1 eigenstate of all $P_n$.

7. The method of claim 6 wherein for each $h_n$ in the second subset ,an ancillary qubit $q_n$ is introduced the method further comprising:

setting $P_n = Z_{q_n}$ on the qubit $q_n$;

setting $S = Z_{q_n}$ for a choice of $q_n$; and

setting $Q = \otimes_{q_n} X_{q_n}$.

8. The method of claim 7 wherein an ancillary qubit $a$ is introduced and for each $h_n$, $P_n = Z_a$ on qubit a, setting $S = Z_a$ and $Q = X_a$.

9. The method of any preceding claim wherein obtaining phase information corresponding to the circuit U further comprises:

measuring $\langle E - SE \rangle = g_k$, wherein the predetermined number of times the circuit is applied is equal to a value k determined by a desired precision to which the phase information is to be extracted.

10. The method of claim 9, wherein the value k corresponds to a time parameter, wherein each execution of the circuit corresponds to a small timestep delta and wherein executing the circuit k times, corresponds to evolving for time k * the small timestep and optionally wherein obtaining phase information corresponding to the circuit U further comprises performing a classical Fourier transform, a matrix pencil method and/or further post processing on the signal $g_k$.

11. The method of any of claims 1 to 8, wherein an initial value of n represents a position of the least significant bit to be read in the binary expansion of a phase to be read out and wherein the predetermined number of times the circuit is applied to the resource state is equal to $2^{n-1}$, the method further comprising:

(a) reading out the nth bit by measuring E;

(b) reducing the value of n by 1;

(c) rotating into an intermediate resource state by applying a unitary correction dependent on the most recent result of measuring E;

(d) applying $U_M$ $2^{n-1}$ times to the resource state;

(e) applying a unitary to provide an appropriate rotation to undo the bits which have already been read out; and

(f) reading out the nth bit by measuring E,

where steps (b) to (f) are repeated with a final iteration being when n is equal to a value of 2.

12. The method of claim 11, wherein step (c) comprises:

identifying the most recent measurement is E = +1 and applying no rotation; or

identifying the most recent measurement is E = -1 and applying an S rotation..

13. A computer apparatus for determining phase information of a matrix representative of a quantum circuit, the computer apparatus comprising:

a classical processor, configured to:

receive a unitary matrix, $U_M$, representative of a quantum circuit, U, which acts on a target set of qubits and identifying generalised Pauli operators, E and S associated with the unitary matrix, $U_M$, the matrices satisfying a first set of conditions:

$$ES = -SE;$$

$$EU_M = U_M^{-1}E;$$

and

$$SU_M = U_M S;$$

define an input state $|\psi\rangle$ to the quantum circuit U represented by the unitary matrix $U_M$, wherein the input state $|\psi\rangle$ has support confined to the +1 or -1 eigenspace of S;

perform operations to obtain phase information corresponding to the quantum circuit, U by:

preparing a resource state $|\psi\rangle_r = |\psi\rangle + e^{ix} E |\psi\rangle$; and

applying $U_M$ to the resource state a predetermined number of times to provide an output state encoding eigenvalues $e^{i\phi_i}$ of the quantum circuit U.

14. The computer apparatus of claim 13, further comprising a quantum information processor, the classical processor and the quantum information processor being communicatively coupled with one another, and wherein the classical processor performing operations to obtain phase information includes:

the classical processor providing control signals to the quantum information processor to cause the quantum information processor to enact the steps of preparing a resource state and applying $U_M$ the predetermined number of times, optionally wherein

the classical processor is further configured to receive information from the quantum information processor once the quantum information processor has enacted the steps of preparing a resource state and applying $U_M$ the predetermined number of times, to read out the encoded eigenvalues, optionally wherein

the computer apparatus is further configured to enact the method of any one of claims 1 to 19.

15. A non-transient computer readable medium comprising instructions which cause a computer apparatus to enact the method steps of any one of claims 1 to 12.

$$SU_M = U_M S;$$

$$|+\rangle^{\otimes k} \quad\quad \bullet \quad \boxed{\text{QFT}} \quad \boxed{\measuredangle} \quad \text{eigenvalue}$$

$$|\psi\rangle \quad \boxed{U^{2^k}} \quad\quad\quad |\phi\rangle \ \text{eigenvector}$$

FIG. 1 (PRIOR ART)

$$|+\rangle \quad\quad \bullet \quad \boxed{X + iY} \ g_k$$

$$|\psi\rangle \quad \boxed{U^k}$$

$$\text{discard}$$

FIG. 2 (PRIOR ART)

FIG. 3

**400**

receive a unitary matrix $V_M$ representative of a circuit $V$, wherein $V_M$ does not satisfy the first set of conditions

**410**

modify $V_M$ to provide a compliant $U_M$

**420**

FIG. 4

FIG. 5

600

| receive a matrix representative of a quantum circuit, the matrix satisfying a first set of conditions | 605 |

| define an input state to the quantum circuit | 610 |

| prepare a resource state based on the input state | 615 |

| apply the matrix to the resource state $2^{n-1}$ times | 620 |

| read out the nth bit by measuring E | 625 |

| reduce the value of n by 1, terminate process when n=1 | 630 |

For n ≥ 2

| regenerate a resource state | 635 |

| apply the matrix to the resource state $2^{n-1}$ times | 640 |

| apply a unitary to undo the bits which have been already read out | 645 |

| read out the nth bit by measuring E | 650 |

FIG. 6

FIG. 7

FIG. 8A

FIG. 8B

FIG. 9

FIG. 10

FIG. 11A

FIG. 11B

FIG. 12

Europäisches
Patentamt

European
Patent Office

Office européen
des brevets

# EUROPEAN SEARCH REPORT

**Application Number**

EP 24 19 7732

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YULONG DONG ET AL: "Ground state preparation and energy estimation on early fault-tolerant quantum computers via quantum eigenvalue transformation of unitary matrices", ARXIV.ORG, CORNELL UNIVERSITY LIBRARY, 201 OLIN LIBRARY CORNELL UNIVERSITY ITHACA, NY 14853, 18 October 2022 (2022-10-18), XP091346224, DOI: 10.1103/PRXQUANTUM.3.040305 * abstract * * sections I, III.2 * | 1-15 | INV. G06N10/20 G06N10/60 |
| A | THOMAS E O'BRIEN ET AL: "Error mitigation via verified phase estimation", ARXIV.ORG, CORNELL UNIVERSITY LIBRARY, 201 OLIN LIBRARY CORNELL UNIVERSITY ITHACA, NY 14853, 6 October 2020 (2020-10-06), XP081779396, * abstract * * sections I, II * | 1-15 | |
| A | US 2020/193072 A1 (JOHANSSON NIKLAS [SE] ET AL) 18 June 2020 (2020-06-18) * abstract * * paragraph [0049] - paragraph [0058] * | 1-15 | **TECHNICAL FIELDS SEARCHED (IPC)** G06N |

The present search report has been drawn up for all claims

| Place of search | Date of completion of the search | Examiner |
|---|---|---|
| The Hague | 13 February 2025 | Papadakis, Georgios |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 19 7732

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2025

| Patent document cited in search report | Publication date | Patent family member(s) | Publication date |
|---|---|---|---|
| US 2020193072 A1 | 18-06-2020 | CN 110869948 A | 06-03-2020 |
| | | SE 1750467 A1 | 21-10-2018 |
| | | US 2020193072 A1 | 18-06-2020 |
| | | WO 2018194502 A1 | 25-10-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. E. RUSSO** ; **K. M. RUDINGER** ; **B. C. A. MORRISON** ; **A. D. BACZEWSKI.** Evaluating energy differences on a quantum computer with robust phase estimation. *Phys. Rev. Lett.*, May 2021, vol. 126, 210501

- **SIRUI LU** ; **MARI CARMEN BAÑULS** ; **J. IGNACIO CIRAC**. Algorithms for quantum simulation at finite energies.. *PRX Quantum*, May 2021, vol. 2, 020321
- **KH.P. GNATENKO** ; **H.P. LABA** ; **V.M. TKACHUK**. Energy levels estimation on a quantum computer by evolution of a physical quantity.. *Physics Letters A*, 2022, vol. 424, 127843